(19) **Europäisches Patentamt / European Patent Office / Office européen des brevets**

(11) **EP 4 604 636 A1**

(12) **EUROPEAN PATENT APPLICATION**
published in accordance with Art. 153(4) EPC

(43) Date of publication:
**20.08.2025 Bulletin 2025/34**

(21) Application number: **22968952.6**

(22) Date of filing: **22.12.2022**

(51) International Patent Classification (IPC):
**H04W 72/04** (2023.01)

(52) Cooperative Patent Classification (CPC):
**H04W 72/04**

(86) International application number:
**PCT/CN2022/141118**

(87) International publication number:
**WO 2024/130657 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **LIU, Zhe**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **INFORMATION PROCESSING METHOD AND APPARATUS, AND TERMINAL DEVICE AND NETWORK DEVICE**

(57) Provided in the embodiments of the present application are an information processing method and apparatus, and a terminal device and a network device. The method comprises: a terminal device determining an effective number of bits of a first information field according to the maximum number of transport layers that is associated with one or more spatial parameters.

**FIG. 2**

EP 4 604 636 A1

## Description

TECHNICAL FIELD

Embodiments of the disclosure relate to the field of mobile communication technologies, and in particular to a method and apparatus for information processing, a terminal device and a network device.

BACKGROUND

In a new radio (NR) system, there is a scenario in which a terminal device transmits an uplink channel to multiple transmission/reception points (TRPs) simultaneously, or transmits an uplink channel using multiple panels or multiple beams simultaneously.

The existing communication systems do not support configuring different maximum numbers of transmission layers for multiple panels. However, in the scenario of simultaneous multi-TRP/panel/beam transmission, different panels may have different maximum numbers of transmission layers. After the schemes of simultaneous multi-TRP/panel/beam transmission are introduced, there is currently no explicit method for a terminal device to determine the number of bits in a relevant information field based on different maximum numbers of transmission layers.

SUMMARY

Embodiments of the disclosure relate to a method and apparatus for information transmission, a terminal device and a network device.

In a first aspect, provided is a method for information processing, including the following operation.

A terminal device determines a number of valid bits in a first information field based on maximum number(s) of transmission layers associated with one or multiple spatial parameters.

In a second aspect, provided is a method for information processing, including the following operation.

A network device transmits first information to a terminal device. The first information is carried by a first information field, and a number of valid bits in the first information field is determined based on maximum number(s) of transmission layers associated with one or multiple spatial parameters.

In a third aspect, provided is an apparatus for information processing, applied to a terminal device and including: a determination unit, configured to determine a number of valid bits in a first information field based on maximum number(s) of transmission layers associated with one or multiple spatial parameters.

In a fourth aspect, provided is an apparatus for information processing, applied to a network device and including: a second sending unit, configured to transmit first information to a terminal device. The first information is carried by a first information field, and a number of valid bits in the first information field is determined by maximum number(s) of transmission layers associated with one or multiple spatial parameters.

In a fifth aspect, the embodiments of the disclosure provide a terminal device including a processor and a memory. The memory is configured to store a computer program, and the processor is configured to call and run the computer program stored in the memory to perform the above method for information transmission.

In a sixth aspect, the embodiments of the disclosure provide a network device including a processor and a memory. The memory is configured to store a computer program, and the processor is configured to call and run the computer program stored in the memory to perform the above method for information processing.

A chip according to the embodiments of the disclosure is configured to implement the above method for information processing.

Specifically, the chip includes a processor configured to call and run a computer program from a memory to enable a device installed with the chip to perform the above method for information processing.

A computer-readable storage medium according to the embodiments of the disclosure has stored thereon a computer program that enables a computer to perform the above method for information processing.

A computer program product according to the embodiments of the disclosure includes computer program instructions that enable a computer to perform the above method for information processing.

A computer program according to the embodiments of the disclosure enables, when running on a computer, the computer to implement the above method for information processing.

BRIEF DESCRIPTION OF THE DRAWINGS

The drawings described herein serve for further understanding of the disclosure, and constitute a part of the disclosure. Exemplary embodiments of the disclosure and description thereof are used to explain the disclosure and do not form inappropriate limitation of the disclosure . In the drawings:

FIG. 1 illustrates a diagram of an application scenario according to embodiments of the disclosure.

FIG. 2 illustrates a first flowchart of a method for information processing according to embodiments of the disclosure.

FIG. 3 illustrates a diagram of a spatial division multiplexing (SDM) uplink transmission according to embodiments of the disclosure.

FIG. 4 illustrates a diagram of single frequency network (SFN) uplink transmission according to embodiments of the disclosure.

FIG. 5 illustrates a second flowchart of a method for information processing according to embodiments of the disclosure.

FIG. 6 illustrates a first structural diagram of an apparatus for information processing according to embodiments of the disclosure.

FIG. 7 illustrates a second structural diagram of an apparatus for information processing according to embodiments of the disclosure.

FIG. 8 illustrates a structural diagram of a communication device according to embodiments of the disclosure.

FIG. 9 illustrates a structural diagram of a chip according to embodiments of the disclosure.

FIG. 10 illustrates a block diagram of a communication system according to embodiments of the disclosure.

## DETAILED DESCRIPTION

Technical solutions of the embodiments of the disclosure will be described below in conjunction with the drawings of the embodiments of the disclosure. Apparently, the described embodiments are some rather than all embodiments of the disclosure. All other embodiments obtained by those skilled in the art based on the embodiments of the disclosure without paying any inventive effort shall fall within the scope of protection of the disclosure.

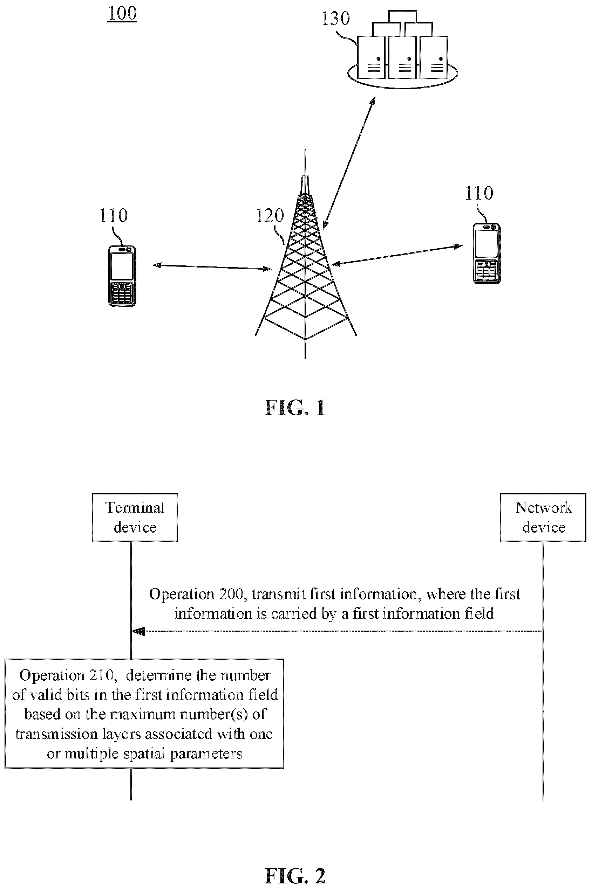

FIG. 1 illustrates a diagram of an application scenario according to embodiments of the disclosure.

As illustrated in FIG. 1, a communication system 100 may include terminal devices 110 and a network device 120. The network device 120 may communicate with the terminal device 110 through an air interface. Multi-service transmission is supported between the terminal device 110 and the network device 120.

It is to be understood that the communication system 100 is provided here to describe the embodiments of the disclosure in an exemplary way, but the embodiments of the disclosure are not limited thereto. That is to say, the technical solutions of the embodiments of the disclosure may be applied to various communication systems, for example a long term evolution (LTE) system, an LTE time division duplex (TDD) system, a universal mobile telecommunication system (UMTS), an Internet of Things (IoT) system, a narrow band Internet of Things (NB-IoT) system, an enhanced machine-type communications (eMTC) system, a 5th-generation communication system (or referred to as new radio (NR) communication system), and/or a future communication system.

In the communication system 100 as illustrated in FIG. 1, the network device 120 may be an access network device communicating with the terminal device 110. The access network device can provide communication coverage for a specific geographical area, and can communicate with the terminal device 110 (e.g., user equipment (UE)) within the coverage.

The network device 120 may be an evolutional Node B (eNB or eNodeB) in an LTE system, or a next generation radio access network (NG RAN) device, or a gNB in an NR system, or a radio controller in a cloud radio access network (CRAN). Alternatively, the network device 120 may be a relay station, an access point, a vehicle-mounted device, a wearable device, a hub, a switch, a network bridge, a router, a network device in a future evolved public land mobile network (PLMN) or the like.

The terminal device 110 may be any terminal device, including but not limited to a terminal device in wired or wireless connection with the network device 120 or another terminal device.

For example, the terminal device 110 may refer to an access terminal, user equipment (UE), a subscriber unit, a subscriber station, a mobile station, a remote station, a remote terminal, a mobile device, a user terminal, a terminal, a wireless communication device, a subscriber agent or a user device. The access terminal may be a cellular phone, a cordless phone, a session initiation protocol (SIP) phone, an IoT device, a satellite hand-held terminal, a wireless local loop (WLL) station, a personal digital assistant (PDA), a hand-held device with a wireless communication function, a computing device or another processing device connected to a radio modem, a vehicle-mounted device, a wearable device, a terminal device in a 5G network, a terminal device in a future evolved network or the like.

The terminal device 100 may be used in device to device (D2D) communication.

The wireless communication system 100 may further include a core network device 130 in communication with the network device 120. The core network device 130 may be a 5G core (5GC) device, for example an access and mobility management function (AMF), for another example an authentication server function (AUSF), for another example a user plane function (UPF), for another example a session management function (SMF). Alternatively, the core network device 130 may also be an evolved packet core (EPC) device in an LTE network, for example a session management function+core packet gateway (SMF+PGW-C) device. It is to be understood that the SMF+PGW-C can realize the functions of both an SMF and a PGW-C. During evolution of the networks, the core network device may also have other names, or the function of the core network may be divided to form new network entities, which are not limited in the embodiments of the disclosure.

Various functional units of the communication system 100 may also establish connections with one another through next generation (NG) interfaces so as to realize communication.

For example, the terminal device establishes an air interface connection with an access network device through an NR interface, so as to transmit user plane data and a control plane signaling. The terminal device may establish a control plane signaling connection with the AMF through an NG interface 1 (N1 for short). The access network device for example a gNB may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through a NG interface 6 (N6 for short). The AMF may establish a control plane signaling connection with the SMF through an NG interface 11 (N11 for short). The SMF may establish a control plane signaling connection with a policy control function (PCF) through an NG interface 7 (N7 for short).

FIG. 1 exemplarily illustrates a network device, a core network device and two terminal devices. Alternatively, the wireless communication system 100 may include multiple network devices, and there may be another number of terminal devices within the coverage of each network device, which is not limited in the embodiments of the disclosure.

It is to be noted that FIG. 1 merely illustrates a system to which the disclosure is applicable in an exemplary way. Of course, the methods illustrated in the embodiments of the disclosure may also be applicable to other systems. In additional, the terms "system" and "network" herein are often used interchangeably. The term "and/or" herein merely describes a relation between associated objects, representing that three relations may exist. For example, A and/or B may represent following three cases: existence of A alone, existence of both A and B, and existence of B alone. Additionally, the character "/" generally indicates that the contextual objects are in an "or" relationship. It is also to be understood that "indicate" referred to in the embodiments of the disclosure may be direct indication or indirect indication, or may refer to that there is an association relationship. By way of example, "A indicates B" may refer to that A directly indicates B, for example, B may be acquired through A. "A indicates B" may also refer to that A indirectly indicates B, for example, A indicates C and B may be acquired through C. "A indicates B" may also refer to that there is an association relationship between A and B. It is to be also understood that "correspond" referred to in the embodiments of the disclosure may mean that there is a direct correspondence or indirect correspondence between two objects, or may mean that there is an association relationship between the two objects, or may mean a relationship between indicating and being indicated or a relationship between configuring and being configured. It also to be understood that "predefined" or "predefined rule" mentioned in the embodiments of the disclosure may be realized by codes or forms or other ways that can be used to indicate relevant information which are pre-stored in a device (for example, a terminal device and a network device). The particular implementation is not limited in the disclosure. For example, "predefined" may refer to being defined in a protocol. It is also to be understood that in the embodiments of the disclosure, the "protocol" may refer to a specification protocol in the field of communications, for example, LTE protocol, NR protocol or relevant protocol applied in future communication systems, which is not limited in the embodiments of the disclosure. It is also to be understood that in the description of the disclosure, "multiple/a plurality of" means two or more, unless otherwise specified clearly.

For convenience in understanding the technical solutions of the embodiments of the disclosure, the relevant technologies of the embodiments of the disclosure are described hereinafter. Any combination formed by the relevant technologies below as optional solutions and the technical solutions of the embodiments of the disclosure shall fall within the scope of protection of the embodiments of the disclosure.

Transmission of a physical uplink shared channel (PUSCH) may include codebook-based transmission and non-codebook-based transmission. A codebook-based PUSCH transmission scheme may include following operations 1-3.

Operation 1, a terminal device transmits, to a network device, a sounding reference signal (SRS) for codebook.

Operation 2, the network device performs uplink channel detection based on the SRS transmitted from the terminal device, schedules a resource for the terminal device, and determines an SRS resource, the number of uplink transmission layers and a precoding matrix that correspond to PUSCH transmission. The network device indicates the above information to the terminal device through downlink control information (DCI).

Operation 3, the terminal device receives the DCI, and transmits a PUSCH based on the indication of the DCI.

In the codebook-based PUSCH transmission scheme, the network device may indicate the number of uplink transmission layers for the PUSCH and the precoding matrix for the PUSCH through a transmitted precoding matrix indicator (TPMI) field in the DCI. The network device may indicate a specific SRS resource in an SRS resource set through an SRS resource indicator (SRI) field in the DCI. The number of transmission layers for the PUSCH and the precoding matrix for the PUSCH are indicated by means of joint coding.

It is to be noted that for the codebook-based PUSCH transmission scheme, the terminal device may determine the number of bits in the TPMI field based on the configured maximum number of transmission layers (which may also be referred to as a maximum rank), namely a value of a configured higher-layer parameter "maxRank/maxMIMO-Layers". As such, the terminal device can obtain the value range of the TPMI field based on the determined number of bits, so as to determine the precoding matrix actually indicated by the TPMI field to complete the PUSCH transmission.

Additionally, a non-codebook-based PUSCH transmission scheme may include following operations 1-3.

Operation 1, the terminal device measures a downlink reference signal, obtains a candidate precoding matrix, precodes an SRS using the candidate precoding matrix, and then transmits the SRS for non-codebook to the network device.

Operation 2, the network device performs uplink channel detection based on the SRS transmitted from the terminal device, schedules a resource for the terminal device, and determines an SRS resource corresponding to a beam for PUSCH transmission. The network device indicates the above information to the terminal device through a DCI.

Operation 3, the terminal device receives the DCI, and transmits a PUSCH based on the indication of the DCI.

In the non-codebook-based PUSCH transmission scheme, the network device indicates the number of PUSCH transmission layers and the SRS resource in the SRS resource set to the terminal device through the SRI field in the DCI. For the non-codebook-based PUSCH transmission scheme, the terminal device may determine the number of bits in the SRI field based on the configured maximum number of transmission layers, namely a higher-layer parameter "max-Rank/maxMIMO-Layers" configured by a network. As such, the terminal device can obtain the value range of the SRI field based on the determined number of bits, so as to determine the SRS resource set actually indicated by the SRI field.

In order to improve the reliability of uplink transmission, a two-TRP/panel/beam PUSCH transmission scheme is introduced in Release 17 (R17) of the standardization process. For the codebook-based PUSCH transmission scheme, PUSCH repetition types include a repetition type A (PUSCH repetition type A) and a repetition type B (PUSCH repetition type B).

For the PUSCH repetition type A, the number of transmission layers is limited to 1, so there is no need to additionally indicate an association relationship between a phase tracking reference signal (PTRS) port and a demodulation reference signal (DMRS) port.

For the PUSCH repetition type B, the number of transmission layers may be greater than 1. When "maxrank" is equal to 2 (that is, the maximum number of transmission layers is 2), only one PTRS port is required. 2 bits are used in the DCI format 0-1 or the DCI format 0-2 to indicate association relationships between the PTRS port and DMRS ports. As shown in Table 1, the 2 bits may include a most significant bit (MSB) and a least significant bit (LSB) corresponding to TRP1 and TRP2, respectively.

Table 1

| MSB state value | DMRS port | LSB state value | DMRS port |
|---|---|---|---|
| 0 | 1st DMRS port associated with the first SRI, first precoding information and the number of layers field | 0 | 1st DMRS port associated with the second SRI, second precoding information and the number of layers field |
| 1 | 2nd DMRS port associated with the first SRI, first precoding information and the number of layers field | 1 | 2nd DMRS port associated with the second SRI, second precoding information and the number of layers field |

As can be seen from Table 1, a state 0 of the MSB may indicate that a PTRS for the PUSCH transmitted to the TRP1 is associated with the 1st DMRS port. A state 1 of the MSB may indicate that the PTRS for the PUSCH transmitted to the TRP1 is associated with the 2nd DMRS port. A state 0 of the LSB may indicate that a PTRS for the PUSCH transmitted to the TRP2 is associated with the 1st DMRS port. A state 1 of the LSB may indicate that the PTRS for the PUSCH transmitted to the TRP2 is associated with the 2nd DMRS port.

When "maxrank" is greater than 2 (that is, the maximum number of transmission layers is greater than 2), whether 1 or 2 PTRS ports are actually required is determined based on the TPMI and the number of transmission layers. 4 bits are used in the DCI format 0-1 or the DCI format 0-2 to indicate association relationships between PTRS port(s) and DMRS ports.

In some embodiments, when the actual number of PTRS ports is determined to be 1 based on the TPMI and the number of transmission layers, the DMRS port associated with the PTRS port may be determined according to Table 2.

Table 2

| State value | DMRS port |
|---|---|
| 0 | 1st DMRS Port |
| 1 | 2nd DMRS Port |

(continued)

| State value | DMRS port |
|---|---|
| 2 | 3rd DMRS Port |
| 3 | 4th DMRS Port |

In some other embodiments, when the actual number of PTRS ports is determined to be 2 based on the TPMI and the number of transmission layers, a respective DMRS port associated with each PTRS port may be determined according to Table 3. The MSB and the LSB are associated with different TRPs respectively, and the respective DMRS port associated with each PTRS is determined by the state of the MSB and the state of the LSB.

Table 3

| MSB state value | DMRS port | | LSB state value | DMRS port |
|---|---|---|---|---|
| 0 | 1st DMRS port sharing PTRS port 0 | | 0 | 1st DMRS port sharing PTRS port 1 |
| 1 | 2nd DMRS port sharing PTRS port 0 | | 1 | 2nd DMRS port sharing PTRS port 1 |

In practical applications, a terminal device is usually configured with the maximum number of transmission layers (i.e., a maxRank), and the terminal device can determine the number of bits in an indication field related to PUSCH transmission parameters and specific indication information based on the maxRank. For example, the terminal device can determine the number of bits in a PTRS-DMRS association field and a specific association relationship table based on the maxRank.

The existing communication systems do not support configuring different maximum numbers of transmission layers for multiple panels. However, in the scenario of simultaneous multi-TRP/panel/beam transmission, different panels may have different maximum numbers of transmission layers. After the schemes of simultaneous multi-TRP/panel/beam transmission are introduced, there is currently no explicit method for determining the number of bits in a relevant indication field based on different maximum numbers of transmission layers. In addition, switching may be performed between the simultaneous multi-TRP/panel/beam transmission scheme and a single-TRP/panel/beam transmission scheme, and the maximum number of transmission layers supported by the simultaneous multi-TRP/panel/beam transmission scheme may be different from that supported by the single-TRP/panel/beam transmission scheme. Therefore, different schemes correspond to different numbers of bits in the DCI, which will affect the blind detection of the terminal device.

Based on this, embodiments of the disclosure provide a method for information processing. As illustrated in FIG. 2, the method for information processing may include the following operations.

Operation 210, a terminal device determines a number of valid bits in a first information field based on maximum number(s) of transmission layers associated with one or multiple spatial parameters.

It is to be understood that the spatial parameter may represent a spatial relationship for transmission/reception of uplink/downlink channel by the terminal device. For example, the spatial relationship may include a panel, beam, or TRP for transmission/reception of uplink/downlink channel by the terminal device.

Optionally, the spatial parameter may include one or more of: reference signal set information, transmission configuration indicator (TCI) state information, panel information, TRP information, control resource set (CORESET) pool information (coresetPoolIndex), or beam information.

Optionally, the reference signal set may include an SRS resource set. The SRS resource set may be associated with a pane/beam/TCI state. In practical applications, the terminal device may transmit an uplink channel using a panel/beam/TCI state same as that used in transmission of the SRS resource set.

The TCI state information may be used for uplink and downlink beam management. A TCI state may include a quasi co-location (QCL) type configuration and a QCL reference signal configuration. The QCL type configuration may be one of a QCL type A (type A), a QCL type B, a QCL type C, or a QCL type D. The QCL reference signal configuration may be a cell identifier (ID), a bandwidth part (BWP) ID, and a reference signal identifier (e.g., a channel state information reference signal (CSI-RS) resource ID or a synchronization signal block (SSB) index). Different QCL types are defined as follows. The QCL Type A is used to configure the following content {Doppler shift, Doppler spread, average delay, delay spread}. The QCL type B is used to configure {Doppler shift, Doppler spread}. The QCL type C is used to configure {Doppler shift, average delay}. The QCL type D is used to configure {Spatial Rx parameter}.

If the network device configures, by a TCI state for a target uplink channel, the QCL reference signal configuration as a resource SSB 1 and the QCL type configuration as type A, type B, or type C, the terminal device may assume that the target uplink signal have a same or similar large-scale parameter as the resource SSB 1. The large-scale parameter is determined by the QCL type configuration.

It is to be understood that if the transmission TRPs or transmission panels or transmission beams for two uplink channels are different from each other, different TCI states are usually configured.

In the embodiments of the disclosure, the panel information may include such as a panel ID, or an index value of a panel, which is not limited in the embodiments of the disclosure.

In embodiments of the disclosure, the coresetPoolIndex may be associated with TRP. The network device may configure, for each of CORESETs, a respective coresetPoolIndex indicating whether the CORESETs belong to a same TRP. The value range of coresetPoolIndex may be 0 or 1. For CORESETs configured with the same coresetPoolIndex, the terminal device may consider that the CORESETs are associated with a same TRP.

In addition, the beam information may include such as a beam ID, or an index value of a beam, which is not limited in the embodiments of the disclosure.

Similarly, the TRP information may include such as a TRP ID, or an index value of a TRP, which is not limited in the embodiments of the disclosure.

In the embodiments of the disclosure, the terminal device may be configured with plural different spatial parameters, that is, the terminal device may perform transmission of an uplink channel through plural different spatial relationships.

Optionally, referring to FIG. 2, before the terminal device transmits the uplink channel, the following operation may be further performed.

Operation 200, a network device transmits first information to the terminal device, where the first information is carried by the first information field.

It is to be understood that the network device may indicate, through the first information, transmission parameters for the terminal device to transmit the uplink channel.

Optionally, the first information may include PTRS-DMRS association information, TPMI information, or SRI information. That is to say, based on the first information, the terminal device may determine information (i.e., PTRS-DMRS association information, a precoding matrix, or an SRS resource etc.) to be used in transmitting the uplink channel.

In embodiments of the disclosure, the first information may be carried by the first information field. It may be understood that the first information field may be used to indicate transmission parameters for simultaneous multi-TRP/panel/beam transmission. The first information field may include one or more of: a PTRS-DMRS association field, a TPMI field, or an SRI field.

Moreover, in the embodiments of the disclosure, each of the plural spatial parameters configured for the terminal device is associated with a respective maximum number of transmission layers. Maximum numbers of transmission layers associated with different ones of the plural spatial parameters may be the same or may be different, which is not limited in the embodiments of the disclosure.

Optionally, the maximum numbers of transmission layers respectively associated with the plural spatial parameters may be determined based on the capability supported by the terminal device, or may be determined based on the configuration information transmitted by the network device, which is not limited in the embodiments of the disclosure.

The value of the first information field is related to the number of valid bits in the first information field. After receiving the first information, the terminal device needs to determine the number of valid bits in the first information field firstly.

In embodiments of the disclosure, the terminal device may determine the number of valid bits in the first information field based on at least one spatial parameter (that is, one or multiple spatial parameters) among the plural spatial parameters.

It is to be understood that after determining the number of valid bits in the first information field, the terminal device can determine the value range of the first information field, so that the terminal device can determine the first information actually carried by the first information field based on the actual value of the first information field.

In summary, in the method for information processing according to the embodiments of the disclosure, each of plural spatial parameters configured for the terminal device may be associated with a respective maximum number of transmission layers, and the terminal device may determine the number of valid bits in the first information field based on the maximum number(s) of transmission layers associated with one or multiple spatial parameters among the plural spatial parameters. As such, the terminal device can determine the information carried by the first information field based on the number of valid bits in the first information field.

It is to be noted that the method for information processing according to the embodiments of the disclosure may be applied to a scenario of simultaneous multi-TRP/panel/beam transmission for an uplink channel.

Optionally, the schemes of simultaneous multi-TRP/panel/beam transmission may include a spatial division multiplexing (SDM) transmission scheme, a single frequency network (SFN) transmission scheme, and the like.

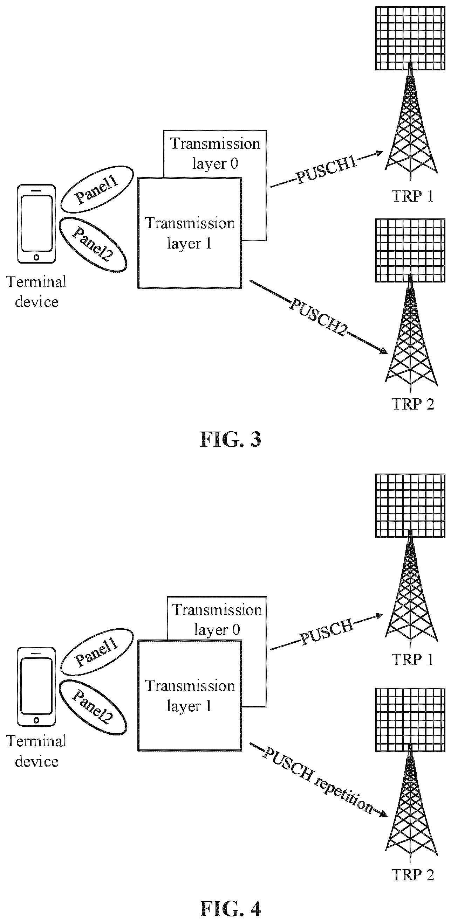

In SDM uplink transmission, different transmission layer sets of a PUSCH are transmitted to the same TRP or different TRPs through different panels/beams of the terminal device, where the same uplink resource is used for the different transmission layers of the PUSCH. Exemplarily, referring to a schematic diagram of SDM uplink transmission illustrated in FIG. 3, the terminal device may transmit a PUSCH 1 to a TRP 1 through a transmission layer 0 on a panel 1, and transmit a PUSCH 2 to a TRP 2 through a transmission layer 1 on a panel2, where the PUSCH 1 is associated with a first TCI state and the PUSCH 2 is associated with a second TCI state. The same time-frequency resource is used for the PUSCH 1 and the PUSCH 2.

In addition, in SFN uplink transmission, repetitions of a PUSCH are transmitted to the same TRP or different TRPs through different panels/beams, where the same frequency-domain resource, the same time-domain resource and the same DMRS port are used for the PUSCH repetitions. Exemplarily, referring to a schematic diagram of SFN uplink transmission illustrated in FIG. 4, the terminal device may transmit a PUSCH to a TRP 1 through a transmission layer 0 on a panel 1, and transmit a PUSCH repetition to a TRP 2 through a transmission layer 1 on a panel 2, where the same time-frequency resource and the same DMRS port are used for the PUSCH and the PUSCH repetition.

In the embodiments of the disclosure, there are multiple manners in which the terminal device determines the number of valid bits in the first information field based on the maximum number of transmission layer(s) associated with the one or more spatial parameters, and two of the multiple manners are introduced in detail hereinafter.

In the embodiments of the disclosure, the operation 210 that the terminal device determines the number of valid bits in the first information field based on the maximum number(s) of transmission layers associated with the one or multiple spatial parameters may be implemented as follows.

Operation 2101, the terminal device determines the number of valid bits in the first information field based on the maximum numbers of transmission layers respectively associated with the multiple spatial parameters.

It is to be understood that in the embodiments of the disclosure, the terminal device may determine the number of valid bits in the first information field based on a respective maximum number of transmission layers associated with each of multiple configured spatial parameters.

Each spatial parameter may be associated with a same or different maximum number of transmission layers, which is not limited in the embodiments of the disclosure.

In a first implementation, if the number of the multiple spatial parameters is $N$, and the maximum number of transmission layers associated with each spatial parameter is not limited, the number of valid bits in the first information field may be determined as follows.

The number $M$ of valid bits in the first information field may be determined according to the following formula (1):

$$M = \sum_{i=1}^{N} \left\lceil \log_2 x_i \right\rceil \qquad (1).$$

where $\lceil \cdot \rceil$ indicates ceiling, $x_i$ is a maximum number of transmission layers associated with an $i^{th}$ spatial parameter, and $x_i$ is an integer greater than or equal to 1.

Exemplarily, when $N=2$, i.e., the terminal device is configured with 2 spatial parameters, if the maximum numbers of transmission layers associated with the 2 spatial parameters are both 1 (namely $x_1 = x_2 = $ ), then $M=0$. If one of the maximum numbers of transmission layers associated with the 2 spatial parameters is 2, and the other is 1 (e.g., $x_1 =1, x_2 =2$), then $M=1$. If the maximum numbers of transmission layers associated with the 2 spatial parameters are both 2 (namely $x_1 = x_2 = 2$), then $M=2$. By analogy, no more detail with be provided one by one herein.

Exemplarily, when $N=3$, i.e., the terminal device is configured with 3 spatial parameters, if the maximum numbers of transmission layers associated with the 3 spatial parameters are all 1 (namely $x_1 = x_2 = x_3 =1$), then $M=0$. If one of the maximum numbers of transmission layers associated with the 3 spatial parameters is 2, and the other two are 1 (e.g., $x_1 = x_2 =1, x_3 =2$), then $M=1$. If two of the maximum numbers of transmission layers associated with the 3 spatial parameters are 2, and the other is 1 (e.g., $x_1 = x_2 =2, x_3 =1$), then $M=2$. If the maximum numbers of transmission layers associated with the 3 spatial parameters are all 2 (namely $x_1 = x_2 = x_3 = 2$ ), then $M=3$. By analogy, no more detail with be provided one by one herein.

Exemplarily, when $N=4$, i.e., the terminal device is configured with 4 spatial parameters, if the maximum numbers of transmission layers associated with the 4 spatial parameters are all 1 (namely $x_1 = x_2 = x_3 = x_4 =1$), then $M=0$. If one of the maximum numbers of transmission layers associated with the 4 spatial parameters is 2, and the others are 1 (e.g., $x_1 = x_2 = x_3 =1, x_4 = 2$), then $M=1$. If two of the maximum numbers of transmission layers associated with the 4 spatial parameters are 2, and the other two are 1 (e.g., $x_1 = x_2 =1, x_3 = x_4 = 2$), then $M=2$. If three of the maximum numbers of transmission layers associated with the 4 spatial parameters are 2, and the other is 1 (e.g., $x_1 = x_2 = x_3 = 2, x_4 =1$), then $M=3$. If the maximum numbers of transmission layers associated with the 4 spatial parameters are all 2 (namely $x_1 = x_2 = x_3 = x_4 =2$), then M=4. By analogy, no more detail with be provided one by one herein.

It is to be noted that a total number of bits in the first information field is greater than or equal to the number of valid bits in the first information field. In a case that the total number of bits in the first information field is greater than the number of valid bits in the first information field, the valid bits in the first information field may be located at higher bits in the first information field or may be located at lower bits in the first information field, which is not limited in the embodiments of the disclosure. For example, the total number of bits in the first information field is 3, and the number of valid bits in the first information field is 2, where among the 3 bits in the first information field, the first two bits are the valid bits, or the last two bits are valid bits.

Optionally, in some embodiments, the $M$ valid bits in the first information field may include $N$ parts, an i$^{th}$ part of the $N$ parts corresponds to an i$^{th}$ spatial parameter of the multiple spatial parameters, and the i$^{th}$ part includes $\lceil \log_2 x_i \rceil$ valid bits.

It is to be understood that different parts of the $M$ valid bits in the first information field may correspond to different spatial parameters. Herein, a part in the first information field corresponding to a certain spatial parameter may be used to indicate a transmission parameter (e.g., a DMRS port, and/or a precoding matrix) associated with the spatial parameter.

Exemplarily, when the first information field is a PTRS-DMRS association field, the i$^{th}$ part of the $M$ valid bits in the first information field corresponding to the i$^{th}$ spatial parameter may indicate the association relationship between the PTRS port and the DMRS port that are associated with the i$^{th}$ spatial parameter. Herein, different values of the i$^{th}$ part in the first information field correspond to different association relationships between PTRS ports and DMRS ports. When the number of valid bits in the i$^{th}$ part in the first information field is 1, if the value of the i$^{th}$ part in the first information field is 0, it indicates that the DMRS port associated with the PTRS port (when associated with the i$^{th}$ spatial parameter) is a first DMRS port; if the value of the i$^{th}$ part in the first information field is 1, it indicates that the DMRS port associated with the PTRS port (when associated with the i$^{th}$ spatial parameter) is a second DMRS port.

Optionally, in some other embodiments, the first information field includes N information sub-fields, an i$^{th}$ information sub-field of the N information sub-fields corresponds to an i$^{th}$ spatial parameter of the $N$ spatial parameters, and the i$^{th}$ information sub-field includes $\lceil \log_2 x_i \rceil$ valid bits.

It is to be understood that the first information field may include multiple information sub-fields, and each information sub-field may correspond to a respective spatial parameter. Each information sub-field may indicate a transmission parameter associated with a spatial parameter corresponding to the information sub-field (e.g., a DMRS port and/or a precoding matrix that are associated with a PTRS port associated with the spatial parameter).

In a second implementation, if the number of the multiple spatial parameters is N, and the maximum number of transmission layers associated with each spatial parameter is at most 2, the number of valid bits in the first information field may be determined as follows.

In a case that the maximum numbers of transmission layers respectively associated with the N spatial parameters are all 1, the number of valid bits in the first information field is 0; in a case that k maximum numbers of transmission layers among the maximum numbers of transmission layers respectively associated with the N spatial parameters are 2, and remaining N-k maximum numbers of transmission layers are 1, the number of valid bits in the first information field is k, where k is an integer greater than or equal to 1 and less than or equal to N.

Optionally, in some embodiments, each of the k valid bits in the first information field corresponds to a specified spatial parameter among the N spatial parameters, and a maximum number of transmission layers associated with the specified spatial parameter is 2.

It may be understood that the spatial parameter which is associated with a maximum number 2 of transmission layers may correspond to a valid bit among the k valid bits, and each of the k valid bits may indicate a transmission parameter associated with a spatial parameter corresponding to the valid bit (e.g., a DMRS port and/or a precoding matrix that are associated with a PTRS port associated with the spatial parameter).

Optionally, in some other embodiments, the first information field includes N information sub-fields, and the N information sub-fields correspond to the N spatial parameters respectively.

Among the N spatial parameters, an information sub-field corresponding to a spatial parameter associated with a maximum number 2 of transmission layers includes 1 valid bit, and an information sub-field corresponding to a spatial parameter associated with a maximum number 1 of transmission layers includes 0 valid bit.

It may be understood that the first information field may include multiple information sub-fields, and each information sub-field may correspond to a respective spatial parameter. Each information sub-field may indicate a transmission parameter (e.g., a DMRS port and/or a precoding matrix) associated with the spatial parameter corresponding to the information sub-field.

In a third implementation, if the multiple spatial parameters include a first spatial parameter and a second spatial parameter, the first spatial parameter is associated with a first maximum number of transmission layers, the second spatial parameter is associated with a second maximum number of transmission layers, and the maximum number of transmission layers associated with each spatial parameter is at most 2, then the number of valid bits in the first information field may be determined as follows.

In a case that the first maximum number of transmission layers is 1, and the second maximum number of transmission layers is 1, the number of valid bits in the first information field is 0; in a case that one of the first maximum number of transmission layers and the second maximum number of transmission layers is 1, and the other one is 2, the number of valid bits in the first information field is 1; in a case that both the first maximum number of transmission layers and the second maximum number of transmission layers are 2, the number of valid bits in the first information field is 2.

Optionally, in some embodiments, in the case that one of the first maximum number of transmission layers and the second maximum number of transmission layers is 1, and the other one is 2, the first information field may correspond to a specified spatial parameter, and the maximum number of transmission layers associated with the specified spatial parameter is 2.

It may be understood that one valid bit in the first information field may correspond to a spatial parameter associated with a maximum number 2 of transmission layers, and this valid bit may indicate a transmission parameter associated with the spatial parameter associated with the maximum number 2 of transmission layers.

Description is made with the first information field being a PTRS-DMRS association field as an example. Table 4 shows a specific indication manner of a bit in the PTRS-DMRS association field when the number of effective bits in the PTRS-DMRS association field is 1.

Table 4

| Value of PTRS-DMRS association field | DMRS port |
|---|---|
| 0 | Spatial parameter corresponding to the maximum number 2 of transmission layers is associated with the first scheduled DMRS port |
| 1 | Spatial parameter corresponding to the maximum number 2 of transmission layers is associated with the second scheduled DMRS port |

As can be seen from Table 4, when the value of the PTRS-DMRS association field is 0, the DMRS port associated with the PTRS port associated with the spatial parameter corresponding to the maximum number 2 of transmission layers is the first scheduled DMRS port. When the value of the PTRS-DMRS association field is 1, the DMRS port associated with the PTRS port associated with the spatial parameter corresponding to the maximum number 2 of transmission layers is the second scheduled DMRS port.

Additionally, in the case that both the first maximum number of transmission layers and the second maximum number of transmission layers are 2, the two valid bits in the first information field correspond to the first spatial parameter and the second spatial parameter respectively.

It may be understood that a higher bit of the two valid bits in the first information field corresponds to one spatial parameter of the first spatial parameter and the second spatial parameter, and a lower bit of the two valid bits corresponds to the other spatial parameter. For example, the higher bit of the two valid bits corresponds to a spatial parameter having a smaller index, and the lower bit of the two valid bits corresponds to a spatial parameter having a larger index. Alternatively, the higher bit of the two valid bits corresponds to the spatial parameter having the larger index, and the lower bit of the two valid bits corresponds to the spatial parameter having the smaller index.

Description is made with the first information field being a PTRS-DMRS association field as an example. Table 5 shows a specific indication manner of different bits in the PTRS-DMRS association field when the number of valid bits in the PTRS-DMRS association field is 2 and a higher bit in the PTRS-DMRS association field corresponds to the first spatial parameter and a lower bit therein corresponds to the second spatial parameter.

Table 5

| Value of higher bit | DMRS port | Value of lower bit | DMRS port |
|---|---|---|---|
| 0 | The first scheduled DMRS port associated with the first spatial parameter | 0 | The first scheduled DMRS port associated with the second spatial parameter |
| 1 | The second scheduled DMRS port associated with the first spatial parameter | 1 | The second scheduled DMRS port associated with the second spatial parameter |

As can be seen from Table 5, when the value of the higher bit in the PTRS-DMRS association field is 0, the DMRS port associated with the PTRS port associated with the first spatial parameter is the first scheduled DMRS port. When the value of the higher bit in the PTRS-DMRS association field is 1, the DMRS port associated with the PTRS port associated with the first spatial parameter is the second scheduled DMRS port. When the value of the lower bit in the PTRS-DMRS association field is 0, the DMRS port associated with the PTRS port associated with the second spatial parameter is the first scheduled DMRS port. When the value of the lower bit in the PTRS-DMRS association field is 1, the DMRS port associated with the PTRS port associated with the second spatial parameter is the second scheduled DMRS port.

Optionally, different spatial parameters among the multiple spatial parameters correspond to different PTRS ports. For example, the multiple spatial parameters include the first spatial parameter and the second spatial parameter, the first spatial parameter corresponds to a PTRS port 0 and the second spatial parameter corresponds to a PTRS port 1. For Table 5, the higher bit corresponds to the first spatial parameter, namely corresponding to the PTRS port 0, and the lower bit corresponds to the second spatial parameter, namely corresponding to the PTRS port 1.

Optionally, different spatial parameters among the multiple spatial parameters correspond to a same PTRS port. For example, the multiple spatial parameters include the first spatial parameter and the second spatial parameter, and both the first spatial parameter and the second spatial parameter correspond to the PTRS port 0. Further, when different spatial parameters among the multiple spatial parameters correspond to a same PTRS port, the PTRS port corresponds to a same DMRS port as well. Alternatively, when different spatial parameters among the multiple spatial parameters correspond to a same PTRS port, the PTRS port may also correspond to different DMRS ports.

Optionally, in some other embodiments, the first information field may include a first information sub-field and a second information sub-field. The first information sub-field corresponds to the first spatial parameter and the second information sub-field corresponds to the second spatial parameter.

It is understandable that the first information sub-field may indicate a transmission parameter (e.g., a DMRS port and/or a precoding matrix) associated with the first spatial parameter. The second information sub-field may indicate a transmission parameter associated with the second spatial parameter (e.g., a DMRS port and/or a precoding matrix that are associated with a PTRS port associated with the spatial parameter).

In the case that one of the first maximum number of transmission layers and the second maximum number of transmission layers is 1, and the other one is 2, a first target information sub-field of the first information field includes 0 valid bit, and a second target information sub-field of the first information field includes 1 valid bit. The first target information sub-field corresponds to a spatial parameter associated with the maximum number 1 of transmission layers, and the second target information sub-field corresponds to a spatial parameter associated with the maximum number 2 of transmission layers.

It is understandable that in the case that one of the first maximum number of transmission layers and the second maximum number of transmission layers is 1, and the other one is 2, an information sub-field in the first information field corresponding to a spatial parameter associated with a maximum number 2 of transmission layers includes 1 valid bit, and an information sub-field corresponding to a spatial parameter associated with a maximum number 1 of transmission layers includes 0 valid bit.

That is to say, when the first maximum number of transmission layers is 1 and the second maximum number of transmission layers is 2, the first information sub-field in the first information field includes 0 valid bit, and the second information sub-field in the first information field includes 1 valid bit. When the first maximum number of transmission layers is 2 and the second maximum number of transmission layers is 1, the first information sub-field in the first information field includes 1 valid bit, and the second information sub-field in the first information field includes 0 valid bit.

Additionally, in the case that both the first maximum number of transmission layers and the second maximum number of transmission layers are 2, the first information sub-field and the second information sub-field each includes 1 valid bit.

Exemplarily, description is made with the first information field being a PTRS-DMRS association field as an example. Table 6 shows an indication manner of each information sub-field containing an valid bit in the PTRS-DMRS association field.

Table 6

| Value of each information sub-field in PTRS-DMRS association field | DMRS port |
|---|---|
| 0 | Spatial parameter corresponding to the information sub-field is associated with the first scheduled DMRS port |
| 1 | Spatial parameter corresponding to the information sub-field is associated with the second scheduled DMRS port |

As can be seen from Table 6, when the value of an information sub-field containing an valid bit is 0, the DMRS port associated with the PTRS port associated with the spatial parameter corresponding to the information sub-field is the first scheduled DMRS port. When the value of an information sub-field containing a valid bit is 1, the DMRS port associated with the spatial parameter corresponding to the information sub-field is the second scheduled DMRS port.

In another embodiment of the disclosure, the operation 210 that the terminal device determines the number of valid bits in the first information field based on the maximum number(s) of transmission layers associated with the one or more spatial parameters may also be implemented as follows.

Operation 2102, the terminal device determines the number of valid bits in the first information field based on a third maximum number of transmission layers associated with the multiple spatial parameters.

It is to be understood that the maximum numbers of transmission layers associated with the multiple spatial parameters are all the third maximum number of transmission layers. That is to say, the maximum numbers of transmission layers associated with the multiple spatial parameters are the same, and are all the third maximum number of transmission layers.

In a first implementation, if the number of the multiple spatial parameters is N, and the third maximum number of transmission layers is any integer greater than or equal to 1, the number of valid bits in the first information field may be determined as follows.

The number M of valid bits in the first information field is determined according to the following formula (2):

$$M = N * \lceil \log_2 y \rceil \qquad (2).$$

where $\lceil \cdot \rceil$ represents ceiling, and y is the third maximum number of transmission layers.

Exemplarily, in a case of $N = 3$, that is, when the terminal device is configured with 3 spatial parameters, if $y = 1$, the number of valid bits in the first information field is 0. If $y = 2$, the number of valid bits in the first information field is 3, and each spatial parameter corresponds to a respective bit. If $y = 3$, the number of valid bits in the first information field is 6, and each spatial parameter corresponds to respective two bits. By analogy, no more detail with be provided one by one herein.

Optionally, in some embodiments, the $M$ valid bits in the first information field may include N parts, an $i^{th}$ part of the N parts corresponds to an $i^{th}$ spatial parameter of the multiple spatial parameters, and the $i^{th}$ part includes $\lceil \log_2 y \rceil$ valid bits.

It is to be understood that different parts of the M valid bits in the first information field may correspond to different spatial parameters. A part corresponding to a certain spatial parameter may indicate a transmission parameter associated with the spatial parameter (e.g., a DMRS port and/or a precoding matrix that are associated with a PTRS port associated with the spatial parameter).

When the first information field is a PTRS-DMRS association field, the $i^{th}$ part of the M valid bits in the first information field corresponding to the $i^{th}$ spatial parameter may indicate the association relationship between the PTRS port and the DMRS port that are associated with the $i^{th}$ spatial parameter. Herein, different values of the $i^{th}$ part in the first information field correspond to different association relationships between PTRS ports and DMRS ports. When the number of valid bits in the $i^{th}$ part in the first information field is 1, if the value of the $i^{th}$ part in the first information field is 0, it indicates that a DMRS port associated with the PTRS port (when associated with the $i^{th}$ spatial parameter) is the first DMRS port; if the value of the $i^{th}$ part in the first information field is 1, it indicates that the DMRS port associated with the PTRS port (when associated with the $i^{th}$ spatial parameter) is the second DMRS port.

Optionally, in some other embodiments, the first information field includes N information sub-fields, an $i^{th}$ information sub-field of the N information sub-fields corresponds to an $i^{th}$ spatial parameter of the N spatial parameters, and the $i^{th}$ information sub-field includes $\lceil \log_2 y \rceil$ valid bits.

It is to be understood that the first information field may include multiple information sub-fields, and each information sub-field may correspond to a respective spatial parameter. Each information sub-field may indicate a transmission parameter associated with the spatial parameter corresponding to the information sub-field (e.g., a DMRS port and/or a precoding matrix that are associated with a PTRS port associated with the spatial parameter).

In a second implementation, if the number of the multiple spatial parameters is N, and the maximum number of transmission layers associated with each spatial parameter is at most 2, the number of valid bits in the first information field may be determined as follows.

In a case that the third maximum number of transmission layers is 1, the number of valid bits in the first information field is 0; in a case that the third maximum number of transmission layers is 2, the number of valid bits in the first information field is N.

In some embodiments, in the case that the third maximum number of transmission layers is 2, the N valid bits in the first information field correspond to the N spatial parameters respectively. Each of the N valid bits in the first information field corresponds to a respective spatial parameter.

In some other embodiments, the first information field includes N information sub-fields, and the N information sub-fields correspond to the N spatial parameters respectively. In the case that the third maximum number of transmission layers is 2, the N information sub-fields each includes 1 valid bit.

In a third implementation, if the multiple spatial parameters include a first spatial parameter and a second spatial parameter, the first spatial parameter is associated with a first maximum number of transmission layers, the second spatial parameter is associated with a second maximum number of transmission layers, and the third maximum number of transmission layers is at most 2, then the number of valid bits in the first information field may be determined as follows.

In a case that the third maximum number of transmission layers is 1, the number of valid bits in the first information field is 0; in a case that the third maximum number of transmission layers is 2, the number of valid bits in the first information field is 2.

In a possible implementation, in the case that the third maximum number of transmission layers is 2, the 2 bits in the first information field correspond to the first spatial parameter and the second spatial parameter respectively.

In another possible implementation, the first information field includes a first information sub-field and a second information sub-field. The first information sub-field corresponds to the first spatial parameter and the second information sub-field corresponds to the second spatial parameter. In the case that the third maximum number of transmission layers is 2, the first information sub-field and the second information sub-field each includes 1 valid bit.

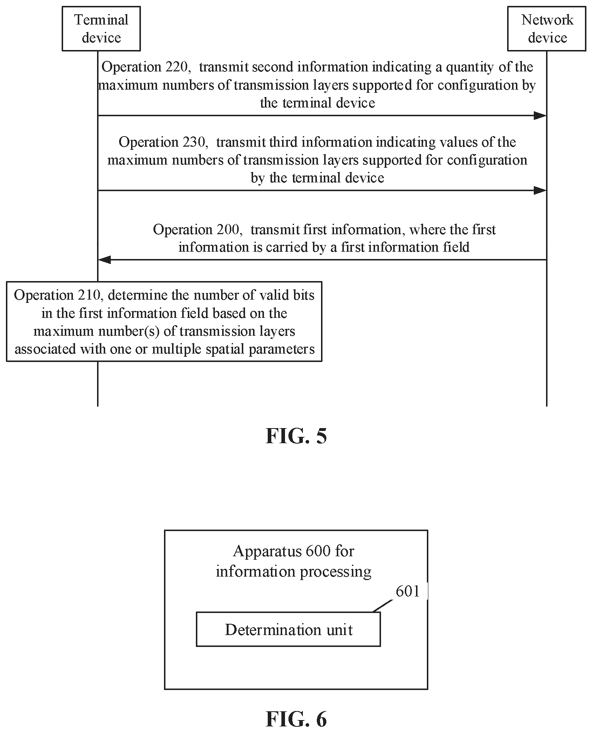

In an embodiment of the disclosure, referring to FIG. 5, the method for information processing according to the embodiments of the disclosure may further include following operations.

Operation 220, the terminal device transmits second information to the network device. Correspondingly, the network device receives the second information from the terminal device. The second information indicates a quantity of maximum numbers of transmission layers supported for configuration by the terminal device.

It is to be understood that there are multiple configuration manners for the maximum number(s) of transmission layers, herein, the configuration manners for the maximum number(s) of transmission layers are related to the quantity/count of the maximum numbers of transmission layers that can be supported for configuration by the terminal device. The quantity of the maximum numbers of transmission layers supported for configuration by the terminal device may be different in different configuration manners. For example, the terminal device may support configuration of one maximum number of transmission layers, two maximum numbers of transmission layers, N maximum numbers of transmission layers and/or so on.

Different configuration manners for the maximum number(s) of transmission layers may correspond to different designs for the first information field. Based on this, the terminal device may report configuration supported by the terminal device to the network device.

Optionally, the second information may be transmitted by a dedicated signaling, or may be transmitted by capability information of the terminal device (e.g., *UECapabilityInformation*), which is not limited in the embodiments of the disclosure.

In some embodiments, the second information may indicate one or more of: the terminal device supports configuration of N+1 maximum numbers of transmission layers, where N maximum numbers of transmission layers (e.g., first N maximum numbers of transmission layers, or last N maximum numbers of transmission layers) among the N+1 maximum numbers of transmission layers are used for a first transmission mode, and a remaining maximum number of transmission layers (e.g., the $(N+1)^{th}$ maximum number of transmission layers or the $1^{st}$ maximum number of transmission layers) among the N+1 maximum numbers of transmission layers is used for a second transmission mode; the terminal device supports configuration of N maximum numbers of transmission layers, where the N maximum numbers of transmission layers are used for the first transmission mode, a specified maximum number of transmission layers among the N maximum numbers of transmission layers is used for the second transmission mode, and the specified maximum number of transmission layers and the second transmission mode are associated with a same spatial parameter; the terminal device supports configuration of 2 maximum numbers of transmission layers, where one of the 2 maximum numbers of transmission layers is used for the first transmission mode, and the other one of the 2 maximum numbers of transmission layers is used for the second transmission mode; or the terminal device supports configuration of one maximum number of transmission layers that is used for the first transmission mode and the second transmission mode.

Herein, the first transmission mode includes simultaneous multi-TRP/panel/beam transmission, and the second transmission mode includes single-TRP/panel/beam transmission.

It is to be noted that the terminal device may support both the first transmission mode involving simultaneous multi-TRP/panel/beam transmission and a second transmission mode involving single-TRP/panel/beam transmission. Herein, the configuration manners for the maximum number(s) of transmission layers for the terminal device may be related to the first transmission mode and the second transmission mode.

It is to be noted that the quantity of the maximum numbers of transmission layers supported for configuration by the terminal device belongs to a capability of the terminal device. In the embodiments of the disclosure, the terminal device may have the following four capabilities.

Capability A: the terminal device supports configuration of N+1 maximum numbers of transmission layers, where N maximum numbers of transmission layers among the N+1 maximum numbers of transmission layers are used for simultaneous multi-TRP/panel/beam transmission, and a remaining maximum number of transmission layers among the N+1 maximum numbers of transmission layers is used for single-TRP/panel/beam transmission.

It is understandable that the terminal device is configured with the N spatial parameters, and the terminal device can support configuration of the N+1 maximum numbers of transmission layers. Herein, the terminal device may support configuration of a respective maximum number of transmission layers for each of the N spatial parameters in the first transmission mode. The terminal device may support configuration of one maximum number of transmission layers for the single-TRP/panel/beam transmission in the second transmission mode.

Herein, in the first transmission mode, the respective maximum number of transmission layers configured for each spatial parameter may be the same or may be different, which is not limited in the embodiments of the disclosure. Additionally, the N maximum numbers of transmission layers configured in the first transmission mode may be the same as or different from the one maximum number of transmission layers configured in the second transmission mode, which is not limited in the embodiments of the disclosure.

Capability B: the terminal device supports configuration of N maximum numbers of transmission layers, where the N maximum numbers of transmission layers are used for the first transmission mode, a specified maximum number of transmission layers among the N maximum numbers of transmission layers is used for the second transmission mode, and the specified maximum number of transmission layers and the second transmission mode are associated with a same spatial parameter.

It is understandable that the terminal device can support configuration of the N maximum numbers of transmission layers. The N maximum numbers of transmission layers may be in one-to-one correspondences with the N spatial parameters configured for the terminal device.

In the first transmission mode, during multi-TRP/panel/beam transmission, the maximum numbers of transmission layers associated with different spatial parameters may be the same or may be different, which is not limited in the embodiments of the disclosure.

In the second transmission mode, the maximum number of transmission layers associated with single-TRP/panel/beam transmission may be a specified maximum number of transmission layers among the N maximum numbers of transmission layers. The spatial parameter associated with this specified maximum number of transmission layers is the same as that associated with the single-TRP/panel/beam transmission.

Capability C: the terminal device supports configuration of 2 maximum numbers of transmission layers, one of the 2 maximum numbers of transmission layers is used for the first transmission mode, and the other one of the 2 maximum numbers of transmission layers is used for the second transmission mode.

It is understandable that in the first transmission mode, the maximum numbers of transmission layers associated with the N spatial parameters are all the same. Exemplarily, with reference to the description of the above embodiments, the N spatial parameters may be associated with the third maximum number of transmission layers.

It is to be noted that in this configuration manner, the maximum number of transmission layers used for the first transmission mode may be the same as or different from the maximum number of transmission layers used for the second transmission mode, which is not limited in the embodiments of the disclosure.

Capability D: the terminal device supports configuration of one maximum number of transmission layers that is used for the first transmission mode and the second transmission mode.

It is understandable that the terminal device may support configuration of only one maximum number of transmission layers that may be used for the first transmission mode and/or the second transmission mode.

Optionally, in a case that the terminal device supports configuration of one maximum number of transmission layers, the maximum numbers of transmission layers respectively associated with the multiple spatial parameters are a minimum one of a first value and a second value.

That is, in a case that the terminal device supports configuration of only one maximum number of transmission layers, the maximum numbers of transmission layers associated with the multiple spatial parameters configured for the terminal device may be min {the first value, the second value} in the first transmission mode.

The first value is the maximum number of transmission layers supported for transmission by each TRP/panel/beam in the first transmission mode, that is, the maximum layer number of an uplink channel that each TRP/panel/beam can transmit in the case of simultaneous multi-TRP/panel/beam transmission for the uplink channel. For example, the first value is 2. In addition, the second value is a maximum number of transmission layers supported for transmission by the single TRP/panel/beam in the second transmission mode.

In embodiments of the disclosure, the terminal device may report one or more of the above four capabilities to the network device through the second information, so that the network device can perform uplink scheduling for the terminal device based on the reported capabilities. Since the configuration manners for the maximum number(s) of transmission layers have a great influence on the design of the DCI transmitted from the network device side and the number of bits in the DCI transmitted from the network device side, and also have a great influence on the blind detection of the terminal device, the supported configuration of the maximum number(s) of transmission layers reported by the terminal device has a high degree of flexibility.

Optionally, as illustrated in FIG. 5, based on the operation 220, the method for information processing according to the embodiments of the disclosure further includes following operation.

Operation 230, the terminal device transmits third information to the network device. Correspondingly, the network device receives the third information from the terminal device. The third information indicates values of the maximum numbers of transmission layers supported for configuration by the terminal device.

It is understandable that the terminal device may report to the network device the specific value of each maximum number of transmission layers supported for configuration, in addition to reporting to the network device the quantity of the maximum numbers of transmission layers supported for configuration.

Exemplarily, when the terminal device supports configuration of the N+1 maximum numbers of transmission layers, the terminal device may report the specific value of each maximum number of transmission layers among the N+1 maximum number of transmission layers to the network device through the third information. When the terminal device supports configuration of the N maximum numbers of transmission layers, the terminal device may report the specific value of each maximum number of transmission layers among the N maximum numbers of transmission layers to the network device through the third information.

It is to be noted that the third information may be transmitted by a dedicated signaling, or may be transmitted by capability information of the terminal device. In addition, the third information and the second information may be the same information or different information, which is not limited in the embodiments of the disclosure.

Exemplarily, the terminal device may report, to the network device through *UECapabilityInformation,* the quantity of the maximum numbers of transmission layers supported for configuration by the terminal device, and the specific value of each maximum number of transmission layers supported for configuration by the terminal device.

In some embodiments, the maximum numbers of transmission layers respectively associated with the multiple spatial parameters, and/or the third maximum number of transmission layers are determined based on any one of: the values of the maximum numbers of transmission layers supported for configuration by the terminal device; configuration information transmitted from the network device; or a predefined rule.

In a possible implementation, the maximum numbers of transmission layers respectively associated with the multiple spatial parameters, and/or the third maximum number of transmission layers may be configured by the network device, or may be determined in a predefined rule. The predefined rule may be realized by codes or forms or other manners for indicating relevant information which are pre-stored in a device (for example, a terminal device and a network device). The particular implementation is not limited in the disclosure. In some embodiments, the predefined rule may also be a predefined value. Exemplarily, the predefined value may be 2, 4 or the like, which is not limited in the embodiments of the disclosure.

In another possible implementation, the terminal device may determine the maximum numbers of transmission layers respectively associated with the multiple spatial parameters and/or the third maximum number of transmission layers in the above embodiments based on the quantity of the maximum numbers of transmission layers supported for configuration by the terminal device, and the specific values of the maximum numbers of transmission layers.

Exemplarily, description is made with the terminal device being configured with the N spatial parameters as an example. In the case that the terminal device supports configuration of the N+1 maximum numbers of transmission layers, the terminal device may determine the maximum numbers of transmission layers respectively associated with the N spatial parameters based on the N maximum numbers of transmission layers used for the first transmission mode among the N+1 maximum numbers of transmission layers. Herein, the maximum numbers of transmission layers associated with different spatial parameters may be the same or may be different. If the maximum numbers of transmission layers associated with the N spatial parameters are the same, the third maximum number of transmission layers in the above embodiments can be obtained.

In the case that the terminal device supports configuration of the N maximum numbers of transmission layers, the terminal device may determine the maximum numbers of transmission layers respectively associated with the N spatial parameters based on the N maximum numbers of transmission layers. Herein, the maximum numbers of transmission layers associated with different spatial parameters may be the same or may be different. If the maximum numbers of transmission layers associated with the N spatial parameters are the same, the third maximum number of transmission layers in the above embodiments can be obtained.

In the case that the terminal device supports configuration of the 2 maximum numbers of transmission layers, the terminal device may determine the maximum numbers of transmission layers associated with the N spatial parameters based on the maximum number of transmission layers used for the first transmission mode in the 2 maximum numbers of transmission layers, thus obtaining the third maximum number of transmission layers.

In the case that the terminal device supports configuration of only one maximum number of transmission layers, the third maximum number of transmission layers = min{the first value, the second value}. Herein, the second value is the maximum number of transmission layers used for single-TRP/panel/beam transmission, or may be the only one maximum number of transmission layers supported for configuration by the terminal device in this implementation.

That is to say, the maximum numbers of transmission layers respectively associated with the multiple spatial parameters may all be different from the second value. Alternatively, a specified maximum number of transmission layers among the maximum numbers of transmission layers respectively associated with the multiple spatial parameters is the same as the second value, and the specified maximum number of transmission layers and the second transmission mode are associated with a same spatial parameter.

Additionally, the third maximum number of transmission layers is different from the second value. Alternatively, the third maximum number of transmission layers is a minimum one of the first value and the second value.

In yet another possible implementation, in the case that the terminal device reports, to the network device through the second information and/or the third information, the quantity of the maximum numbers of transmission layers supported for configuration by the terminal device and the values of the maximum numbers of transmission layers, the network device can configure the maximum numbers of transmission layers respectively associated with the multiple spatial parameters and/or the third maximum number of transmission layers in practical applications for the terminal device according to the above capabilities reported by the terminal device. In the case that the terminal device reports, to the network device through the second information and/or the third information, the quantity of the maximum numbers of transmission layers supported for configuration by the terminal device and the values of the maximum numbers of transmission layers, the terminal device and the network device may also determine the maximum numbers of transmission layers respectively associated with the multiple spatial parameters and/or the third maximum number of transmission layers in practical applications according to a predefined rule.

In some embodiments, the terminal device may switch between the first transmission mode and the second transmission mode. Optionally, the terminal device may switch between the first transmission mode and the second transmission mode based on the indication from the network device. It is to be understood that in the first transmission mode, the terminal device may determine the number of valid bits in the first information field according to the method provided in the above embodiments.

In the embodiments of the disclosure, the operation 210 that the terminal device determines the number of valid bits in the first information field based on the maximum number(s) of transmission layers associated with the one or multiple spatial parameters may also be implemented as follows.

In a case of receiving fourth information, the terminal device determines the number of valid bits in the first information field based on the maximum number(s) of transmission layers associated with the one or multiple spatial parameters.

The fourth information indicates simultaneous multi-TRP/panel/beams transmission.

It is to be noted that the fourth information may be used to indicate simultaneous multi-TRP/panel/beams transmission, or may be used to indicate single-TRP/panel/beam transmission.

The fourth information indicates simultaneous multi-TRP/panel/beams transmission, which may be understood as: the fourth information may instruct the terminal device to perform uplink channel transmission in the first transmission mode, or instruct the terminal device to transmit the uplink channel using multiple spatial parameters at the same time, or instruct the terminal device to transmit the uplink channel using an SDM/SFN scheme.

The fourth information indicates single-TRP/panel/beam transmission, which may be understood as: the fourth information may instruct the terminal device to perform uplink channel transmission in the second transmission mode.

Exemplarily, if the value of the fourth information is a first value (for example, "10" or "11"), it indicates that the terminal device transmits an uplink channel through multiple TRPs/panels/beams simultaneously; if the value of the fourth information is a second value (for example, "01" or "00"), it indicates that the terminal device transmits an uplink channel through a single TRP/panel/beam.

Exemplarily, the fourth information may be first sounding reference signal (SRS) resource set indication information, and the first SRS resource set indication information indicates an SRS resource set. When the first SRS resource set indication information indicates multiple SRS resources, it may implicitly indicate that the terminal device transmits the uplink channel through multiple TRPs/panels/beams simultaneously. When the first SRS resource set indication information indicates one SRS resource, it may indicate that the terminal device performs transmission through a single TRP/panel/beam. Alternatively, when the value of the first SRS resource set indication information is a first value (for example, "10" or "11"), it indicates that the terminal device transmits the uplink channel through multiple TRPs/panels/beams simultaneously; when the value of the first SRS resource set indication information is a second value (for example, "01" or "00"), it indicates that the terminal device transmits the uplink channel through a single TRP/panel/beam.

In embodiments of the disclosure, when the fourth information is used to indicate simultaneous multi-TRP/panel/beam transmission, the terminal device may determine the number of valid bits in the first information field based on the maximum number(s) of transmission layers associated with the one or multiple spatial parameters. The manner in which the terminal device determines the number of valid bits in the first information field based on the maximum number(s) of transmission layers associated with the one or multiple spatial parameters is the same as that described in above embodiments, which will not be described herein again for brevity.

In the embodiments of the disclosure, the terminal device receives first downlink control information (DCI). The first DCI is used for scheduling simultaneous multi-TRP/panel/beam transmission, and the first DCI includes the first information field. That is to say, the first information field in the embodiments of the disclosure may be carried by the first DCI.

In a possible implementation, a total number of bits in the first DCI is the same as a total number of bits in a second DCI, and the second DCI is used for scheduling single-TRP/panel/beam transmission.

It is to be understood that in a scenario of switching between the first transmission mode and the second transmission mode, in order to avoid an increase in the number of blind detections of the terminal device, the network device may set the total number of bits in the first DCI that schedules simultaneous multi-TRP/ panel/beam transmission to be the same as the total number of bits in the second DCI that schedules single-TRP/panel/beam transmission. That is, the first DCI and the second DCI are aligned with each other in terms of the total number of bits.

Optionally, the total number of bits in the first DCI and the total number of bits in the second DCI are a maximum one of a number of valid bits in the first DCI and a number of valid bits in the second DCI.

It is to be understood that the number of valid bits in the first DCI is denoted as a first number of bits, and the number of valid bits in the second DCI is denoted as a second number of bits. The total number of bits in the first DCI and the total number of bits in the second DCI = max {the first number of bits, the second number of bits}.

In a case that the number of valid bits in the first DCI is different from the number of valid bits in the second DCI, one of the first DCI or the second DCI with a smaller number of valid bits is subjected to zero padding, until the total number of bits reaches the total number of bits in the other one of the first DCI or the second DCI with a larger number of valid bits.

That is to say, the network device may perform zero padding on the DCI with a smaller number of valid bits to align the first DCI and the second DCI in terms of the total number of bits, so that the total number of bits in the first DCI is the same as the total number of bits in the second DCI. Exemplarily, if the number of valid bits in the first DCI is smaller than the number of valid bits in the second DCI, zero is padded after the valid bits in the first DCI, that is, zero padding is performed starting from a higher bit. In addition, zero padding may also be performed starting from a lower bit, which is not limited in the embodiments of the disclosure.

It can be seen therefrom that in the methods for information processing according to the embodiments of the disclosure, the first DCI that schedules simultaneous multi-TRP/panel/beam transmission and the second DCI that schedules single-TRP/panel/beam transmission may be aligned with each other in terms of the total number of bits, so that the total number of bits in the first DCI is the same as the total number of bits in the second DCI. In this way, when the terminal device dynamically switches between the first transmission mode and the second transmission mode, an increase in the number of blind detections by the terminal device caused by the difference in the total number of bits in the first DCI and the total number of bits the second DCI is avoided.

In another possible implementation, the second DCI may include a second information field having the same function as the first information field. A total number of bits in the second information field is the same as a total number of bits in the first information field.

In this implementation, the first information field in the first DCI and the second information field the second DCI that have the same function may be set to include the same total number of bits, that is, the information fields having the same function in the first DCI and the second DCI are aligned with each other in terms of the total numbers of bits.

Exemplarily, the second information field may include one or more of: a PTRS-DMRS association field, a TPMI field, or an SRI field.

Optionally, the total number of bits in the first information field and the total number of bits in the second information field are a maximum one of the number of valid bits in the first information field and a number of valid bits in the second information field.

Herein, the number of valid bits in the first information field is denoted as a first number of bits, and the number of valid bits in the second information field is denoted as a second number of bits. The total number of bits in the first information field in the first DCI and the total number of bits in the second information field in the second DCI = max {the first number of bits, the second number of bits}.

In a case that the number of valid bits in the second information field is different from the number of valid bits in the first information field, one of the first information field or the second information field with a smaller number of valid bits is subjected to zero padding, until the total number of bits reaches the total number of bits in the other one of the first information field or the second information field with a larger number of valid bits.

That is to say, the network device may perform zero padding on the DCI with a small number of valid bits to align the first DCI and the second DCI in terms of the total number of bits, so that the total number of bits in the first DCI is the same as the total number of bits in the second DCI. Exemplarily, if the number of valid bits in the first DCI is smaller than the number of valid bits in the second DCI, zero is padded after the valid bits in the first DCI, that is, zero padding is performed starting from a higher bit. In addition, zero padding may also be performed starting from a lower bit, which is not limited in the embodiments of the disclosure.

Optionally, after the total number of bits in the first information field and the total number of bits in the second information field are enabled to be the same as each other by performing zero padding on the first information field or the second information field, if the total number of bits in the first DCI carrying the first information field is different from the total number of bits in the second DCI carrying the second information field, zero padding may be performed on one of the first DCI or the second DCI with a smaller number of bits, so that the total number of bits in the first DCI is the same as the total number of bits in the second DCI.

It can be seen therefrom that in the methods for information processing according to the embodiment of the disclosure, the information fields having the same function may be aligned with each other in terms of the total number of bits, so that the information fields having the same function include the same total number of bits. Moreover, the first DCI and the second DCI may also be aligned in terms of the total number of bits. In this way, when the terminal device dynamically switches between the first transmission mode and the second transmission mode, an increase in the number of blind detections by the terminal device caused by the difference in the total number of bits in the first DCI and the total number of bits the second DCI is avoided.

In yet another possible implementation, the second DCI includes a second information field having the same function as the first information field. The first information field includes N information sub-fields corresponding to the multiple spatial parameters respectively. A total number of bits in a specified information sub-field in the first information field is the same as a total number of bits in the second information field. A spatial parameter corresponding to the specified information sub-field is the same as a spatial parameter associated with the second information field.

In this implementation, the network device may set the information fields, which have the same function and are associated with the same spatial parameter, in the first DCI and the second DCI to include the same total number of bits. That is, the information fields that have the same function and are associated with the same spatial parameter are aligned with each other in terms of the number of bits.

It is to be understood that the first DCI may be used for scheduling simultaneous multi-TRP/ panel/beam transmission, and the first information field in the first DCI may correspond to the multiple different spatial parameters. The second DCI is used for scheduling single-TRP/panel/beam transmission, and the second information field in the second DCI may correspond to a spatial parameter for the single-TRP/panel/beam transmission.

Optionally, the total number of bits in the target information sub-field and the total number of bits in the second information field are a maximum one of a number of valid bits in the target information sub-field and a number of valid bits in the second information field.

In a case that the number of valid bits in the target information sub-field is different from the number of valid bits in the second information field, one of the target information sub-field or the second information field with a smaller number of valid bits is subjected to zero padding, until the total number of bits reaches the total number of bits in the other one of the target information sub-field or the second information field with a larger number of valid bits.

Exemplarily, the number of valid bits in the first information field is denoted as a first number of bits. The first information field may include a first information sub-field and a second information sub-field. The first information sub-field is associated with the first spatial parameter, and the second information sub-field is associated with the second spatial parameter. The number of valid bits in the first information sub-field is denoted as a third number of bits, and the number of valid bits in the second information sub-field is denoted as a fourth number of bits. The number of valid bits in the second information field in the second DCI is a second number of bits, and the second information field may be associated with the first spatial parameter or the second spatial parameter. If the second information field is associated with the first spatial parameter, the total number of bits in the first information sub-field associated with the first spatial parameter in the first information field is the same as the total number of bits in the second information field, which is specifically max {the third number of bits, the second number of bits}. If the second information field is associated with the second spatial parameter, the total number of bits in the second information sub-field associated with the second spatial parameter in the first information field is the same as the total number of bits in the second information field, which is specifically max {the fourth number of bits, the second number of bits}.

Optionally, after the total number of bits in the target information sub-field in the first information field and the total number of bits in the second information field are enabled to be the same as each other by performing zero padding on the target information sub-field in the first information field or the second information field, if the total number of bits in the first DCI carrying the first information field is different from the total number of bits in the second DCI carrying the second information field, zero padding may be performed on one of the first DCI or the second DCI with a smaller number of bits, so that the total number of bits in the first DCI is the same as the total number of bits in the second DCI.

It can be seen therefrom that in the methods for information processing according to the embodiments of the disclosure, the information fields, that have the same function and are associated with the same spatial parameter, in the first DCI and the second DCI may be aligned with each other in terms of the number of bits, thereby preventing a change in the numbers of bits in information fields with the same function corresponding to the same spatial parameter during switching between the first transmission mode and the second transmission mode. Moreover, the first DCI and the second DCI may also be aligned in terms of the total number of bits. In this way, when the terminal device dynamically switches between the first transmission mode and the second transmission mode, an increase in the number of blind detections by the terminal device caused by the difference in the total number of bits in the first DCI and the total number of bits the second DCI is avoided.

Preferred implementations of the disclosure are described in detail in conjunction with accompanying drawings. However, the disclosure is not limited to the particular details in the above implementations. Within the range of the technical idea of the disclosure, multiple simple variations can be made to the technical solutions of the disclosure, and these variations all fall within the scope of protection of the disclosure. For example, the particular technical features described in the above particular implementations may be combined in any suitable way without conflict. To avoid unnecessary repetition, the possible combinations are not described in the disclosure. For example, different implementations of the disclosure may also be combined arbitrarily without departing from the concept of the disclosure, which shall be considered as content disclosed by the disclosure as well. For another example, without conflict, the various embodiments described in the disclosure and/or technical features of the various embodiments may be combined with the related art arbitrarily, and the technical solutions obtained via the combination shall also fall within the scope of protection of the disclosure.

It is also to be understood that in the method embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics. In addition, in the embodiments of the disclosure, the terms "downlink", "uplink" and "sidelink" are used for representing the transmission directions of signals or data. "Downlink" is used for representing the transmission direction of signals or data being a first direction from a station to user equipment in a cell. "Uplink" is used for representing the transmission direction of signals or data being a second direction from user equipment in a cell to a station. "Sidelink " is used for representing the transmission direction of signals or data being a third direction from user equipment 1 to user equipment 2. For example, "downlink signal" represents that the transmission direction of the signals is the first direction. In addition, in the embodiments of the disclosure, the term "and/or" herein merely describes a relation between associated objects, representing that three relations may exist. In particular, A and/or B may represent following three cases: existence of A alone, existence of both A and B, and existence of B alone. Additionally, the character "/" generally indicates that the contextual objects are in an "or" relationship.

FIG. 6 illustrates a first structural diagram of composition of an apparatus for information processing according to embodiments of the disclosure. The apparatus is applied to a terminal device. As illustrated in FIG. 6, the apparatus 600 for information processing includes a determination unit 601.

The determination unit 601 is configured to determine a number of valid bits in a first information field based on maximum number(s) of transmission layers associated with one or multiple spatial parameters.

Optionally, the determination unit 601 is further configured to determine the number of valid bits in the first information field based on the maximum numbers of transmission layers respectively associated with the multiple spatial parameters.

Optionally, a number of the multiple spatial parameters is N, and the number M of valid bits in the first information field is determined according to a following formula: $M = \sum_{i=1}^{N} \lceil \log_2 x_i \rceil$. Herein, $\lceil \cdot \rceil$ indicates ceiling, $x_i$ is a maximum number of transmission layers associated with an $i^{th}$ spatial parameter, and $x_i$ is an integer greater than or equal to 1.

Optionally, the M valid bits include N parts, an $i^{th}$ part of the N parts corresponds to an $i^{th}$ spatial parameter of the multiple spatial parameters, and the $i^{th}$ part includes $\lceil \log_2 x_i \rceil$ valid bits.

Optionally, the first information field includes N information sub-fields, an $i^{th}$ information sub-field of the N information sub-fields corresponds to an $i^{th}$ spatial parameter of the N spatial parameters, and the $i^{th}$ information sub-field includes $\lceil \log_2 x_i \rceil$ valid bits.

Optionally, a number of the multiple spatial parameters is N. In a case that the maximum numbers of transmission layers respectively associated with the N spatial parameters are all 1, the number of valid bits in the first information field is 0. In a case that k maximum numbers of transmission layers among the maximum numbers of transmission layers respectively associated with the N spatial parameters are 2 and remaining N-k maximum numbers of transmission layers are 1, the number of valid bits in the first information field is k, where k is an integer greater than or equal to 1 and less than or equal to N.

Optionally, each of the k valid bits in the first information field corresponds to a specified spatial parameter of the N spatial parameters, and a maximum number of transmission layers associated with the specified spatial parameter is 2.

Optionally, the first information field includes N information sub-fields, and the N information sub-fields correspond to the N spatial parameters respectively. An information sub-field corresponding to a spatial parameter of the N spatial parameters which is associated with a maximum number 2 of transmission layers includes 1 valid bit, and an information sub-field corresponding to a spatial parameter of the N spatial parameters which is associated with a maximum number 1 of transmission layers includes 0 valid bit.

Optionally, the multiple spatial parameters includes a first spatial parameter and a second spatial parameter, the first spatial parameter is associated with a first maximum number of transmission layers, and the second spatial parameter is associated with a second maximum number of transmission layers. In a case that the first maximum number of transmission layers is 1, and the second maximum number of transmission layers is 1, the number of valid bits in the first information field is 0. In a case that one of the first maximum number of transmission layers and the second maximum number of transmission layers is 1, and the other one is 2, the number of valid bits in the first information field is 1. In a case that both the first maximum number of transmission layers and the second maximum number of transmission layers are 2, the number of valid bits in the first information field is 2.

Optionally, in the case that one of the first maximum number of transmission layers and the second maximum number of transmission layers is 1, and the other one is 2, the first information field corresponds to a specified spatial parameter, and the maximum number of transmission layers associated with the specified spatial parameter is 2. In the case that both the first maximum number of transmission layers and the second maximum number of transmission layers are 2, the 2 bits in the first information field correspond to the first spatial parameter and the second spatial parameter respectively.

Optionally, the first information field includes a first information sub-field and a second information sub-field, the first information sub-field corresponds to the first spatial parameter and the second information sub-field corresponds to the second spatial parameter. In the case that one of the first maximum number of transmission layers and the second maximum number of transmission layers is 1, and the other one is 2, a first target information sub-field of the first information field includes 0 valid bit, and a second target information sub-field of the first information field includes 1 valid bit. The first target information sub-field corresponds to a spatial parameter associated with the maximum number 1 of transmission layers, and the second target information sub-field corresponds to a spatial parameter associated with the maximum number 2 of transmission layers. In the case that both the first maximum number of transmission layers and the second maximum number of transmission layers are 2, the first information sub-field and the second information sub-field each includes 1 valid bit.

Optionally, the determination unit 601 is further configured to determine the number of valid bits in the first information field based on a third maximum number of transmission layers associated with the multiple spatial parameters.

Optionally, a number of the multiple spatial parameters is N, and the number M of valid bits in the first information field is determined according to a following formula: $M = N * \lceil \log_2 y \rceil$. Herein, $\lceil \cdot \rceil$ represents ceiling, and y is the third maximum number of transmission layers.

Optionally, the M valid bits include N parts, an $i^{th}$ part of the N parts corresponds to an $i^{th}$ spatial parameter of the multiple spatial parameters, and the $i^{th}$ part includes $\lceil \log_2 y \rceil$ valid bits.

Optionally, the first information field includes N information sub-fields, an $i^{th}$ information sub-field of the N information sub-fields corresponds to an $i^{th}$ spatial parameter of the N spatial parameters, and the $i^{th}$ information sub-field includes $\lceil \log_2 y \rceil$ valid bits.

Optionally, in a case that the third maximum number of transmission layers is 1, the number of valid bits in the first information field is 0. In a case that the third maximum number of transmission layers is 2, the number of valid bits in the first information field is N.

Optionally, in the case that the third maximum number of transmission layers is 2, the N valid bits in the first information field correspond to the N spatial parameters respectively.

Optionally, the first information field includes N information sub-fields, and the N information sub-fields correspond to the N spatial parameters respectively. In the case that the third maximum number of transmission layers is 2, the N information sub-fields each includes 1 valid bit.

Optionally, the multiple spatial parameters include a first spatial parameter and a second spatial parameter. In a case that the third maximum number of transmission layers is 1, the number of valid bits in the first information field is 0. In a case that the third maximum number of transmission layers is 2, the number of valid bits in the first information field is 2.

Optionally, in the case that the third maximum number of transmission layers is 2, the 2 bits in the first information field correspond to the first spatial parameter and the second spatial parameter respectively.

Optionally, the first information field includes a first information sub-field and a second information sub-field, the first information sub-field corresponds to the first spatial parameter and the second information sub-field corresponds to the second spatial parameter. In the case that the third maximum number of transmission layers is 2, the first information sub-field and the second information sub-field each includes 1 valid bit.

Optionally, the first information field is configured to indicate transmission parameters for simultaneous multi-transmission/reception point (TRP)/panel/beam transmission for an uplink channel. The number of valid bits in the first information field is used for determining first information carried in the first information field, and the first information includes the transmission parameters for the simultaneous multi-TRP/panel/ beam transmission.

Optionally, the first information field includes one or more of: a phase tracking reference signal-demodulation reference signal (PTRS-DMRS) association field, a transmitted precoding matrix indicator (TPMI) field, or a sounding reference signal (SRS) resource indicator (SRI) field.

Optionally, the apparatus 600 for information processing may further include a first transceiver unit. The first transceiver unit is configured to transmit second information to a network device. The second information indicates a quantity of maximum numbers of transmission layers supported for configuration by the terminal device.

Optionally, the second information indicates one or more of: the terminal device supports configuration of N+1 maximum numbers of transmission layers, where N maximum numbers of transmission layers among the N+1 maximum numbers of transmission layers are used for a first transmission mode, and a remaining maximum number of transmission layers among the N+1 maximum numbers of transmission layers is used for a second transmission mode; the terminal device supports configuration of N maximum numbers of transmission layers, where the N maximum numbers of transmission layers are used for the first transmission mode, a specified maximum number of transmission layers among the N maximum numbers of transmission layers is used for the second transmission mode, and the specified maximum number of transmission layers and the second transmission mode are associated with a same spatial parameter; the terminal device supports configuration of 2 maximum numbers of transmission layers, where one of the 2 maximum numbers of transmission layers is used for the first transmission mode, and the other one of the 2 maximum numbers of transmission layers is used for the second transmission mode; or the terminal device supports configuration of one maximum number of transmission layers that is used for the first transmission mode and/or the second transmission mode.

Herein, the first transmission mode includes simultaneous multi-transmission/reception point (TRP)/panel/beam transmission, and the second transmission mode includes single-TRP/panel/beam transmission.

Optionally, in a case that the terminal device supports configuration of one maximum number of transmission layers, the maximum numbers of transmission layers respectively associated with the multiple spatial parameters are a minimum one of a first value and a second value. The first value is a maximum number of transmission layers supported for transmission by each TRP/panel/beam in the first transmission mode, and the second value is a maximum number of transmission layers supported for transmission by the single TRP/panel/beam in the second transmission mode.

Optionally, the first transceiver unit is further configured to transmit third information to the network device. The third information indicates values of the maximum numbers of transmission layers supported for configuration by the terminal device.

Optionally, the maximum numbers of transmission layers respectively associated with the multiple spatial parameters, and/or the third maximum number of transmission layers are determined based on any one of: the values of the maximum numbers of transmission layers supported for configuration by the terminal device; configuration information transmitted from a network device; or a predefined rule.

Optionally, the maximum numbers of transmission layers respectively associated with the multiple spatial parameters are all different from a second value. The second value is a maximum number of transmission layers supported for transmission by the single TRP/panel/beam in the second transmission mode; or a specified maximum number of transmission layers among the maximum numbers of transmission layers respectively associated with the multiple spatial parameters is the same as the second value, and the specified maximum number of transmission layers and the second transmission mode are associated with a same spatial parameter.

Optionally, the third maximum number of transmission layers is different from a second value; or the third maximum number of transmission layers is a minimum one of a first value and the second value. The first value is a maximum number of transmission layers supported for transmission by each TRP/panel/beam in the first transmission mode, and the second value is a maximum number of transmission layers supported for transmission by the single TRP/panel/beam in the second transmission mode.

Optionally, the determination unit 601 is further configured to determine, in a case of receiving fourth information, the number of valid bits in the first information field based on the maximum number(s) of transmission layers associated with the one or multiple spatial parameters. The fourth information indicates simultaneous multi-transmission/reception point (TRP)/panel/beam transmission for an uplink channel.

Optionally, the fourth information is first sounding reference signal (SRS) resource set indication information, and the first SRS resource set indication information indicates an SRS resource set.

Optionally, the first transceiver unit is further configured to receive first downlink control information (DCI). The first DCI is used for scheduling simultaneous multi-transmission/reception point (TRP)/panel/beam transmission, and the first DCI includes the first information field.

Optionally, a total number of bits in the first DCI is the same as a total number of bits in a second DCI, and the second DCI is used for scheduling single-TRP/panel/beam transmission.

Optionally, the total number of bits in the first DCI and the total number of bits in the second DCI are a maximum one of a number of valid bits in the first DCI and a number of valid bits in the second DCI.

Optionally, in a case that the number of valid bits in the first DCI is different from the number of valid bits in the second DCI, one of the first DCI or the second DCI with a smaller number of valid bits is subjected to zero padding, until the total number of bits reaches the total number of bits in the other one of the first DCI or the second DCI with a larger number of valid bits.

Optionally, the second DCI includes a second information field, and the second information field has a same function as the first information field. A total number of bits in the second information field is the same as a total number of bits in the first information field.

Optionally, the total number of bits in the first information field and the total number of bits in the second information field are a maximum one of the number of valid bits in the first information field and a number of valid bits in the second information field.

Optionally, in a case that the number of valid bits in the second information field is different from the number of valid bits in the first information field, one of the first information field or the second information field with a smaller number of valid bits is subjected to zero padding, until the total number of bits reaches the total number of bits in the other one of the first information field or the second information field with a larger number of valid bits.

Optionally, the second DCI includes a second information field, and the second information field has a same function as the first information field. The first information field includes N information sub-fields corresponding to the multiple spatial parameters respectively. A total number of bits in a specified information sub-field in the first information field is the same as a total number of bits in the second information field. A spatial parameter corresponding to the specified information sub-field is the same as a spatial parameter associated with the second information field.

Optionally, the total number of bits in the target information sub-field and the total number of bits in the second information field are a maximum one of a number of valid bits in the target information sub-field and a number of valid bits in the second information field.

Optionally, in a case that the number of valid bits in the target information sub-field is different from the number of valid bits in the second information field, one of the target information sub-field or the second information field with a smaller number of valid bits is subjected to zero padding, until the total number of bits reaches the total number of bits in the other one of the target information sub-field or the second information field with a larger number of valid bits.

Optionally, the one or multiple spatial parameters includes one or more of: reference signal set information, transmission configuration indicator (TCI) state information, panel information, control resource set (CORESET) pool information, beam information, or transmission/reception point (TRP) information.

Those skilled in the art should understand that relevant description of the above apparatus 600 for information processing according to the embodiments of the disclosure can be understood with reference to the relevant description of the methods for information processing according to the embodiments of the disclosure.

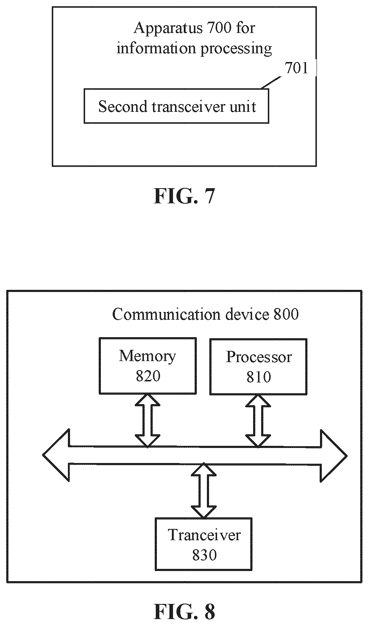

FIG. 7 illustrates a second structural diagram of composition of an apparatus for information processing according to embodiments of the disclosure. The apparatus is applied to a network device. As illustrated in FIG. 7, the apparatus 700 for information processing includes a second transceiver unit 701.

The second transceiver unit 701 is configured to transmit first information to a terminal device. The first information is carried by a first information field, and a number of valid bits in the first information field is determined by maximum number(s) of transmission layers associated with one or multiple spatial parameters.

Optionally, the number of valid bits in the first information field is determined based on the maximum numbers of transmission layers respectively associated with the multiple spatial parameters.

Optionally, a number of the multiple spatial parameters is N, and the number M of valid bits in the first information field is determined according to a following formula: $M = \sum_{i=1}^{N} \lceil \log_2 x_i \rceil$. Herein, $\lceil \cdot \rceil$ indicates ceiling, $x_i$ is a maximum number of transmission layers associated with an ith spatial parameter, and $x_i$ is an integer greater than or equal to 1.

Optionally, the M valid bits in the first information field include N parts, an ith part of the N parts corresponds to an ith spatial parameter of the multiple spatial parameters, and the ith part includes $\lceil \log_2 x_i \rceil$ valid bits.

Optionally, the first information field includes N information sub-fields, an ith information sub-field of the N information sub-fields corresponds to an ith spatial parameter of the N spatial parameters, and the ith information sub-field includes $\lceil \log_2 x_i \rceil$ valid bits.

Optionally, a number of the multiple spatial parameters is N. In a case that the maximum numbers of transmission layers respectively associated with the N spatial parameters are all 1, the number of valid bits in the first information field is 0. In a case that k maximum numbers of transmission layers among the maximum numbers of transmission layers respectively associated with the N spatial parameters are 2, and remaining N-k maximum numbers of transmission layers are 1, the number of valid bits in the first information field is k, where k is an integer greater than or equal to 1 and less than or equal to N.

Optionally, each of the k valid bits in the first information field corresponds to a specified spatial parameter of the N spatial parameters, and a maximum number of transmission layers associated with the specified spatial parameter is 2.

Optionally, the first information field includes N information sub-fields, and the N information sub-fields correspond to the N spatial parameters respectively. An information sub-field corresponding to a spatial parameter of the N spatial parameters which is associated with a maximum number 2 of transmission layers includes 1 valid bit, and an information sub-field corresponding to a spatial parameter of the N spatial parameters which is associated with a maximum number 1 of transmission layers includes 0 valid bit.

Optionally, the multiple spatial parameters include a first spatial parameter and a second spatial parameter, the first spatial parameter is associated with a first maximum number of transmission layers, and the second spatial parameter is associated with a second maximum number of transmission layers. In a case that the first maximum number of transmission layers is 1, and the second maximum number of transmission layers is 1, the number of valid bits in the first information field is 0. In a case that one of the first maximum number of transmission layers and the second maximum number of transmission layers is 1, and the other one is 2, the number of valid bits in the first information field is 1. In a case that both the first maximum number of transmission layers and the second maximum number of transmission layers are 2, the number of valid bits in the first information field is 2.

Optionally, in the case that one of the first maximum number of transmission layers and the second maximum number of transmission layers is 1, and the other one is 2, the first information field corresponds to a specified spatial parameter, and the maximum number of transmission layers associated with the specified spatial parameter is 2. In the case that both the first maximum number of transmission layers and the second maximum number of transmission layers are 2, the 2 bits in the first information field correspond to the first spatial parameter and the second spatial parameter respectively.

Optionally, the first information field includes a first information sub-field and a second information sub-field, the first information sub-field corresponds to the first spatial parameter and the second information sub-field corresponds to the second spatial parameter. In the case that one of the first maximum number of transmission layers and the second maximum number of transmission layers is 1, and the other one is 2, a first target information sub-field of the first information field includes 0 valid bit, and a second target information sub-field of the first information field includes 1 valid bit. The first target information sub-field corresponds to a spatial parameter associated with the maximum number 1 of transmission layers, and the second target information sub-field corresponds to a spatial parameter associated with the maximum number 2 of transmission layers. In the case that both the first maximum number of transmission layers and the second maximum number of transmission layers are 2, the first information sub-field and the second information sub-field each includes 1 valid bit.

Optionally, the number of valid bits in the first information field is determined based on a third maximum number of transmission layers associated with the multiple spatial parameters.

Optionally, a number of the multiple spatial parameters is N, and the number M of valid bits in the first information field is determined according to a following formula: $M = N * \lceil \log_2 y \rceil$. Herein, $\lceil \cdot \rceil$ represents ceiling, and y is the third maximum number of transmission layers.

Optionally, the M valid bits include N parts, an $i^{th}$ part of the N parts corresponds to an $i^{th}$ spatial parameter of the multiple spatial parameters, and the $i^{th}$ part includes $\lceil \log_2 y \rceil$ valid bits.

Optionally, the first information field includes N information sub-fields, an $i^{th}$ information sub-field of the N information sub-fields corresponds to an $i^{th}$ spatial parameter of the N spatial parameters, and the $i^{th}$ information sub-field includes $\lceil \log_2 y \rceil$ valid bits.

Optionally, a number of the multiple spatial parameters is N. In a case that the third maximum number of transmission layers is 1, the number of valid bits in the first information field is 0. In a case that the third maximum number of transmission layers is 2, the number of valid bits in the first information field is N.

Optionally, in the case that the third maximum number of transmission layers is 2, the N valid bits in the first information field correspond to the N spatial parameters respectively.

Optionally, the first information field includes N information sub-fields, and the N information sub-fields correspond to the N spatial parameters respectively. In the case that the third maximum number of transmission layers is 2, the N information sub-fields each includes 1 valid bit.

Optionally, the multiple spatial parameters includes a first spatial parameter and a second spatial parameter. In a case that the third maximum number of transmission layers is 1, the number of valid bits in the first information field is 0. In a case that the third maximum number of transmission layers is 2, the number of valid bits in the first information field is 2.

Optionally, in the case that the third maximum number of transmission layers is 2, the 2 bits in the first information field correspond to the first spatial parameter and the second spatial parameter respectively.

Optionally, the first information field includes a first information sub-field and a second information sub-field, the first information sub-field corresponds to the first spatial parameter and the second information sub-field corresponds to the second spatial parameter. In the case that the third maximum number of transmission layers is 2, the first information sub-field and the second information sub-field each includes 1 valid bit.

Optionally, the first information field is configured to indicate transmission parameters for simultaneous multi-transmission/reception points (TRP)/panel/beam transmission , and the first information includes the transmission parameters for the simultaneous multi-TRP/panel/beam transmission.

Optionally, the first information field includes one or more of: a phase tracking reference signal-demodulation reference signal (PTRS-DMRS) association field, a transmitted precoding matrix indicator (TPMI) field, or a sounding reference signal (SRS) resource indicator (SRI) field.

Optionally, the second transceiver unit 701 is further configured to receive second information from the terminal device. The second information indicates a quantity of maximum numbers of transmission layers supported for configuration by the terminal device.

Optionally, the second information indicates one or more of: the terminal device supports configuration of N+1 maximum numbers of transmission layers, where N maximum numbers of transmission layers among the N+1 maximum numbers of transmission layers are used for a first transmission mode, and a remaining maximum number of transmission layers among the N+1 maximum numbers of transmission layers is used for a second transmission mode; the terminal device supports configuration of N maximum numbers of transmission layers, where the N maximum numbers of transmission layers are used for the first transmission mode, a specified maximum number of transmission layers among the N maximum numbers of transmission layers is used for the second transmission mode, and the specified maximum number of transmission layers and the second transmission mode are associated with a same spatial parameter; the terminal device supports configuration of 2 maximum numbers of transmission layers, one of the 2 maximum numbers of transmission layers is used for the first transmission mode, and the other one of the 2 maximum numbers of transmission layers is used for the second transmission mode; or the terminal device supports configuration of one maximum number of transmission layers that is used for the first transmission mode and/or the second transmission mode.

Herein, the first transmission mode includes simultaneous multi-transmission/reception point (TRP)/panel/beam transmission, and the second transmission mode includes single-TRP/panel/beam transmission.

Optionally, in a case that the terminal device supports configuration of one maximum number of transmission layers, the maximum numbers of transmission layers respectively associated with the multiple spatial parameters are a minimum one of a first value and a second value. The first value is a maximum number of transmission layers supported for transmission by each TRP/panel/beam in the first transmission mode, and the second value is a maximum number of transmission layers supported for transmission by the single TRP/panel/beam in the second transmission mode.

Optionally, the second transceiver unit 701 is further configured to receive third information from the terminal device. The third information indicates values of the maximum numbers of transmission layers supported for configuration by the terminal device.

Optionally, the maximum numbers of transmission layers respectively associated with the multiple spatial parameters, and/or the third maximum number of transmission layers are determined according to any one of: the values of the maximum numbers of transmission layers supported for configuration by the terminal device; configuration information transmitted by the network device; or a predefined rule.

Optionally, the maximum numbers of transmission layers respectively associated with the multiple spatial parameters are all different from a second value. The second value is a maximum number of transmission layers supported for transmission by the single TRP/panel/beam in the second transmission mode; or a specified maximum number of transmission layers among the maximum numbers of transmission layers respectively associated with the multiple spatial parameters is the same as the second value, and the specified maximum number of transmission layers and the second transmission mode are associated with a same spatial parameter.

Optionally, the third maximum number of transmission layers is different from a second value; or the third maximum number of transmission layers is a minimum one of a first value and the second value. The first value is a maximum number of transmission layers supported for transmission by each TRP/panel/beam in the first transmission mode, and the second value is a maximum number of transmission layers supported for transmission by the single TRP/panel/beam in the second transmission mode.

Optionally, in a case that the network device transmits fourth information, the number of valid bits in the first information field is determined based on the maximum number(s) of transmission layers associated with the one or multiple spatial parameters. The fourth information indicates simultaneous multi-transmission/reception point (TRP)/panel/beam transmission for an uplink channel.

Optionally, the fourth information is first sounding reference signal (SRS) resource set indication information, and the first SRS resource set indication information indicates an SRS resource set.

Optionally, the second transceiver unit 701 is further configured to transmit first downlink control information (DCI) to the terminal device. The first DCI is used for scheduling simultaneous multi-transmission/reception point (TRP)/panel/beam transmission, and the first DCI includes the first information field.

Optionally, a total number of bits in the first DCI is the same as a total number of bits in a second DCI, and the second DCI is used for scheduling single-TRP/panel/beam transmission.

Optionally, the total number of bits in the first DCI and the total number of bits in the second DCI are a maximum one of a number of valid bits in the first DCI and a number of valid bits in the second DCI.

Optionally, in a case that the number of valid bits in the first DCI is different from the number of valid bits in the second DCI, one of the first DCI or the second DCI with a smaller number of valid bits is subjected to zero padding, until the total number of bits reaches the total number of bits in the other one of the first DCI or the second DCI with a larger number of valid bits.

Optionally, the second DCI includes a second information field, and the second information field has a same function as the first information field. A total number of bits in the second information field is the same as a total number of bits in the first information field.

Optionally, the total number of bits in the first information field and the total number of bits in the second information field are a maximum one of a number of valid bits in the first information field and a number of valid bits in the second information field.

Optionally, in a case that the number of valid bits in the second information field is different from the number of valid bits in the first information field, one of the first information field or the second information field with a smaller number of valid bits is subjected to zero padding, until the total number of bits reaches the total number of bits in the other one of the first information field or the second information field with a larger number of valid bits.

Optionally, the second DCI includes a second information field, and the second information field has a same function as the first information field. The first information field includes N information sub-fields corresponding to the multiple spatial parameters respectively. A total number of bits in a specified information sub-field in the first information field is the same as a total number of bits in the second information field. A spatial parameter corresponding to the specified information sub-field is the same as a spatial parameter associated with the second information field.

Optionally, the total number of bits in the target information sub-field and the total number of bits in the second information field are a maximum one of a number of valid bits in the target information sub-field and a number of valid bits in the second information field.

Optionally, in a case that the number of valid bits in the target information sub-field is different from the number of valid bits in the second information field, one of the target information sub-field or the second information field with a smaller number of valid bits is subjected to zero padding, until the total number of bits reaches the total number of bits in the other one of the target information sub-field or the second information field with a larger number of valid bits.

Optionally, the one or multiple spatial parameters include one or more of: reference signal set information, transmission configuration indicator (TCI) state information, panel information, control resource set (CORESET) pool information, or beam information.

Those skilled in the art should understand that relevant description of the above apparatus 700 for information processing according to the embodiments of the disclosure can be understood with reference to the relevant description of the methods for information processing according to the embodiments of the disclosure.

FIG. 8 illustrates a structural diagram of a communication device 800 according to embodiments of the disclosure. The communication device may be a terminal device, or may be a network device. The communication device 800 as illustrated in FIG. 8 includes a processor 810. The processor 810 may call and run a computer program from a memory to implement the methods according to the embodiments of the disclosure.

Optionally, as illustrated in FIG. 8, the communication device 800 may further include a memory 820. The processor 810 may call and run a computer program from the memory 820 to implement the methods according to the embodiments of the disclosure.

The memory 820 may be a device independent from the processor 810, or may be integrated in the processor 810.

Optionally, as illustrated in FIG. 8, the communication device 800 may further include a transceiver 830. The processor 810 may control the transceiver 830 to communicate with other devices, in particular to transmit information or data to other devices or receive information or data from other device.

The transceiver 830 may include a transmitter and a receiver. The transceiver 830 may further include an antenna, and there may be one or more antennas.

Optionally, the communication device 800 may particularly be the network device of the embodiments of the disclosure, and the communication device 800 may implement corresponding procedures that are implemented by the network device in various methods according to the embodiments of the disclosure, which is not described here again for simplicity.

Optionally, the communication device 800 may particularly be a mobile terminal/terminal device according to the embodiments of the disclosure, and the communication device 800 may implement corresponding procedures that are implemented by the mobile terminal/terminal device in various methods according to the embodiments of the disclosure, which is not described here again for simplicity.

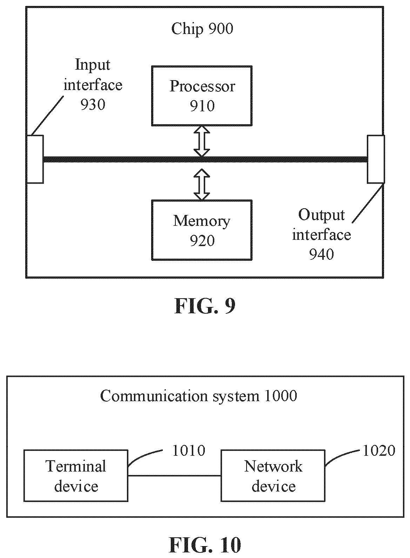

FIG. 9 illustrates a structural diagram of a chip according to embodiments of the disclosure. The chip 900 as illustrated in FIG. 9 includes a processor 910. The processor 910 may call and run a computer program from a memory to implement the methods according to the embodiments of the disclosure.

Optionally, as illustrated in FIG. 9, the chip 900 may further include a memory 920. The processor 910 may call and run a computer program from the memory 920 to implement the methods according to the embodiments of the disclosure.

The memory 920 may be a device independent from the processor 910, or may be integrated in the processor 910.

Optionally, the chip 900 may further include an input interface 930. The processor 910 may control the input interface 930 to communicate with other devices or chips, in particularly to acquire information or data from other devices or chips.

Optionally, the chip 900 may further include an output interface 940. The processor 910 may control the output interface 940 to communicate with other devices or chips, in particularly to output information or data to other devices or chips.

Optionally, the chip may be applied to the network device of the embodiments of the disclosure, and the chip may implement corresponding procedures that are implemented by the network device in various methods according to the embodiments of the disclosure, which is not described here again for simplicity.

Optionally, the chip may be applied to a mobile terminal/terminal device according to the embodiments of the disclosure, and the chip may implement corresponding procedures that are implemented by the mobile terminal/terminal device in various methods according to the embodiments of the disclosure, which is not described here again for simplicity.

It should be understood that, the chip mentioned in the embodiments of the disclosure may also be referred to as a system-level chip, a system chip, a chip system or a system-on-chip.

Embodiments of the disclosure further provide a computer storage medium storing one or more computer programs that, when executed by one or more processors, implement the operations of the above methods according to the embodiments of the disclosure.

FIG. 10 illustrates a block diagram of a communication system 1000 according to embodiments of the disclosure. As illustrated in FIG. 10, the communication system 1000 includes a terminal device 1010 and a network device 1020.

The terminal device 1010 may be applied to implement corresponding functions implemented by the terminal device in the above methods, and the network device 1020 may be applied to implement corresponding functions implemented by the network device in the above methods, which is not described here again for simplicity.

It should be understood that the processor of the embodiments of the disclosure may be an integrated circuit chip, and has the capability of signal processing. During implementation, the various operations of in the above method embodiments may be completed by an integrated logic circuit in hardware form or instructions in software form in a processor. The above processor may be a general-purpose processor, a digital signal processor (DSP), an application specific integrated circuit (ASIC), a field programmable gate array (FPGA), or another programmable logical device, a discrete gate or a transistor logical device, or a discrete hardware component. The processor may implement or perform the various methods, operations or logic blocks disclosed in the embodiments of the disclosure. The universal processor may be a microprocessor or the processor may also be any conventional processor and the like. The operations of the methods disclosed in combination with the embodiments of the disclosure may be directly embodied as being performed and completed by a hardware decoding processor, or being performed and completed by a combination of hardware and software modules in a decoding processor. The software module may be located in a mature storage medium in the art such as a random access memory, a flash memory, a read-only memory, a programmable read-only memory, an electrically erasable programmable memory, or a register. The storage medium is in a memory, and a processor reads information from the memory to implement operations of the above methods in combination with the hardware.

It may be understood that the memory in the embodiments of the disclosure may be a volatile memory or a non-volatile memory, or may include both a volatile memory and a non-volatile memory. The non-volatile memory may be a read-only memory (ROM), a programmable ROM (PROM), an erasable PROM (RPROM), an electrically RPROM (EEPROM), or a flash memory. The volatile memory may be a random access memory (RAM), that is used as an external cache. By way of example, but not limiting description, RAMs in many forms are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a directly rambus RAM (DR RAM). It should be noted that the memory in the system and method described herein is intended to include but not limited to memories of these and any other suitable types.

It should be understood that the memories are exemplary but not limiting description. For example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct Rambus RAM (DR RAM) or the like. That is to say, the memory in the embodiments of the disclosure is intended to include but not limited to memories of these and any other suitable types.

Embodiments of the disclosure further provide a computer-readable storage medium for storing a computer program.

Optionally, the computer-readable storage medium may be applied to the network device of the embodiments of the disclosure, and the computer program enables a computer to implement corresponding procedures that are implemented by the network device in various methods according to the embodiments of the disclosure, which is not described here again for simplicity.

Optionally, the computer-readable storage medium may be applied to a mobile terminal/terminal device according to the embodiments of the disclosure, and the computer program enables a computer to implement corresponding procedures that are implemented by the mobile terminal/terminal device in various methods according to the embodiments of the disclosure, which is not described here again for simplicity.

Embodiments of the disclosure further provide a computer program product including computer program instructions.

Optionally, the computer program product may be applied to the network device of the embodiments of the disclosure, and the computer program instructions enable a computer to implement corresponding procedures that are implemented by the network device in various methods according to the embodiments of the disclosure, which is not described here again for simplicity.

Optionally, the computer program product may be applied to a mobile terminal/terminal device according to the embodiments of the disclosure, and the computer program instructions enable a computer to implement corresponding procedures that are implemented by the mobile terminal/terminal device in various methods according to the embodiments of the disclosure, which is not described here again for simplicity.

Embodiments of the disclosure further provide a computer program.

Optionally, the computer program may be applied to the network device of the embodiments of the disclosure, and the computer program, when running on a computer, enables the computer to implement corresponding procedures that are implemented by the network device in various methods according to the embodiments of the disclosure, which is not described here again for simplicity.

Optionally, the computer program may be applied to a mobile terminal/terminal device according to the embodiments of the disclosure, and the computer program, when running on a computer, enables the computer to implement corresponding procedures that are implemented by the mobile terminal/terminal device in various methods according to the embodiments of the disclosure, which is not described here again for simplicity.

Those of ordinary skill in the art may realize that the units and algorithm operations of various examples described in combination with the embodiments disclosed herein may be implemented by electronic hardware, or a combination of computer software and electronic hardware. Whether the functions are performed in form of hardware or software form depends on the specific application and design constraint conditions of the technical solution. Professionals may use a different method to realize the described function for each specific application, and such implementation should not be construed as extending beyond the scope of the disclosure

Those skilled in the art may clearly appreciate that for convenience and simplicity of description, the particular operation procedures of the system, apparatus and units described above, the references may be made to the corresponding procedures in the foregoing method embodiments, which will not be described herein again.

In some embodiments provided in the disclosure, it is to be understood that the disclosed system, device and method may be implemented in other ways. For example, the device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solutions of the embodiments according to actual requirements.

Additionally, various functional units in the embodiments of the disclosure may be integrated in one processing unit, or may exist separately and physically; or two or more units may be integrated in one unit.

If implemented in form of software functional units and sold or used as independent product, the functions may be stored in a computer-readable storage medium. Based on such understanding, the technical solution of the disclosure substantially or in part making contributions to the related art or a part of the technical solution may be embodied in a software product. The computer software product is stored in a storage medium, and includes several instructions to enable a computer device (which may be a personal computer, a server, a network device or the like) to perform all or some operations of the methods according to various embodiments of the disclosure. The foregoing storage medium includes various media capable of storing program codes such as a USB flash drive, a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subject to the scope of protection of the claims.

**Claims**

1. A method for information processing, comprising:
   determining, by a terminal device, a number of valid bits in a first information field based on maximum number(s) of transmission layers associated with one or a plurality of spatial parameters.

2. The method of claim 1, wherein determining, by the terminal device, the number of valid bits in the first information field based on the maximum number(s) of transmission layers associated with the one or the plurality of spatial parameters comprises:
   determining, by the terminal device, the number of valid bits in the first information field based on the maximum numbers of transmission layers respectively associated with the plurality of spatial parameters.

3. The method of claim 2, wherein a number of the plurality of spatial parameters is N, and the number M of valid bits in the first information field is determined according to a following formula:

$$M = \sum_{i=1}^{N} \lceil \log_2 x_i \rceil$$

   wherein $\lceil \cdot \rceil$ denotes ceiling, $x_i$ is a maximum number of transmission layers associated with an $i^{th}$ spatial parameter, and $x_i$ is an integer greater than or equal to 1.

4. The method of claim 3, wherein the M valid bits comprise N parts, an $i^{th}$ part of the N parts corresponds to an $i^{th}$ spatial parameter of the plurality of spatial parameters, and the $i^{th}$ part comprises $\lceil \log_2 x_i \rceil$ valid bits.

5. The method of claim 3, wherein the first information field comprises N information sub-fields, an $i^{th}$ information sub-field of the N information sub-fields corresponds to an $i^{th}$ spatial parameter of the N spatial parameters, and the $i^{th}$ information sub-field comprises $\lceil \log_2 x_i \rceil$ valid bits.

6. The method of any one of claims 2 to 5, wherein a number of the plurality of spatial parameters is N;

   in a case that the maximum numbers of transmission layers respectively associated with the N spatial parameters are all 1, the number of valid bits in the first information field is 0;
   in a case that k maximum numbers of transmission layers among the maximum numbers of transmission layers respectively associated with the N spatial parameters are 2, and remaining N-k maximum numbers of transmission layers are 1, the number of valid bits in the first information field is k, k being an integer greater than or equal to 1 and less than or equal to N.

7. The method of claim 6, wherein each of the k valid bits in the first information field corresponds to a specified spatial parameter of the N spatial parameters, and a maximum number of transmission layers associated with the specified spatial parameter is 2.

8. The method of claim 6, wherein the first information field comprises N information sub-fields, and the N information sub-fields correspond to the N spatial parameters respectively; and
an information sub-field corresponding to a spatial parameter of the N spatial parameters which is associated with a maximum number 2 of transmission layers comprises 1 valid bit, and an information sub-field corresponding to a spatial parameter of the N spatial parameters which is associated with a maximum number 1 of transmission layers comprises 0 valid bit.

9. The method of any one of claims 2 to 8, wherein the plurality of spatial parameters comprise a first spatial parameter and a second spatial parameter, the first spatial parameter is associated with a first maximum number of transmission layers, and the second spatial parameter is associated with a second maximum number of transmission layers; wherein

in a case that the first maximum number of transmission layers is 1, and the second maximum number of transmission layers is 1, the number of valid bits in the first information field is 0;
in a case that one of the first maximum number of transmission layers and the second maximum number of transmission layers is 1, and the other one is 2, the number of valid bits in the first information field is 1;
in a case that both the first maximum number of transmission layers and the second maximum number of transmission layers are 2, the number of valid bits in the first information field is 2.

10. The method of claim 9, wherein:

in the case that the one of the first maximum number of transmission layers and the second maximum number of transmission layers is 1, and the other one is 2, the first information field corresponds to a specified spatial parameter, a maximum number of transmission layers associated with the specified spatial parameter being 2;
in the case that both the first maximum number of transmission layers and the second maximum number of transmission layers are 2, the 2 bits in the first information field correspond to the first spatial parameter and the second spatial parameter respectively.

11. The method of claim 9, wherein the first information field comprises a first information sub-field and a second information sub-field, the first information sub-field corresponds to the first spatial parameter and the second information sub-field corresponds to the second spatial parameter;

in the case that the one of the first maximum number of transmission layers and the second maximum number of transmission layers is 1, and the other one is 2, a first target information sub-field of the first information field comprises 0 valid bit, and a second target information sub-field of the first information field comprises 1 valid bit, wherein the first target information sub-field corresponds to a spatial parameter associated with the maximum number 1 of transmission layers, and the second target information sub-field corresponds to a spatial parameter associated with the maximum number 2 of transmission layers;
in the case that both the first maximum number of transmission layers and the second maximum number of transmission layers are 2, the first information sub-field and the second information sub-field each comprises 1 valid bit.

12. The method of claim 1, wherein determining, by the terminal device, the number of valid bits in the first information field based on the maximum number(s) of transmission layers associated with the one or the plurality of spatial parameters comprises:
determining, by the terminal device, the number of valid bits in the first information field based on a third maximum number of transmission layers associated with the plurality of spatial parameters.

13. The method of claim 12, wherein a number of the plurality of spatial parameters is N, and the number M of valid bits in the first information field is determined according to a following formula:

$$ M = N * \lceil \log_2 y \rceil $$

wherein $\lceil \cdot \rceil$ denotes ceiling, and y is the third maximum number of transmission layers.

14. The method of claim 13, wherein,

the M valid bits comprise N parts, an $i^{th}$ part of the N parts corresponds to an $i^{th}$ spatial parameter of the plurality of spatial parameters, and the $i^{th}$ part comprises $\lceil \log_2 y \rceil$ valid bits.

15. The method of claim 13, wherein the first information field comprises N information sub-fields, an $i^{th}$ information sub-field of the N information sub-fields corresponds to an $i^{th}$ spatial parameter of the N spatial parameters, and the $i^{th}$ information sub-field comprises $\lceil \log_2 y \rceil$ valid bits.

16. The method of any one of claims 12 to 15, wherein a number of the plurality of spatial parameters is N;

in a case that the third maximum number of transmission layers is 1, the number of valid bits in the first information field is 0;
in a case that the third maximum number of transmission layers is 2, the number of valid bits in the first information field is N.

17. The method of claim 16, wherein in the case that the third maximum number of transmission layers is 2, the N valid bits in the first information field correspond to the N spatial parameters respectively.

18. The method of claim 16, wherein the first information field comprises N information sub-fields, and the N information sub-fields correspond to the N spatial parameters respectively; and
in the case that the third maximum number of transmission layers is 2, the N information sub-fields each comprises 1 valid bit.

19. The method of any one of claims 12 to 18, wherein the plurality of spatial parameters comprise a first spatial parameter and a second spatial parameter;

in a case that the third maximum number of transmission layers is 1, the number of valid bits in the first information field is 0;
in a case that the third maximum number of transmission layers is 2, the number of valid bits in the first information field is 2.

20. The method of claim 19, wherein in the case that the third maximum number of transmission layers is 2, the 2 bits in the first information field correspond to the first spatial parameter and the second spatial parameter respectively.

21. The method of claim 19, wherein the first information field comprises a first information sub-field and a second information sub-field, the first information sub-field corresponds to the first spatial parameter and the second information sub-field corresponds to the second spatial parameter; and
in the case that the third maximum number of transmission layers is 2, the first information sub-field and the second information sub-field each comprises 1 valid bit.

22. The method of any one of claims 1 to 21, wherein the first information field is used to indicate transmission parameters for simultaneous multi-transmission/reception point (TRP)/panel/beam transmission for an uplink channel; and
the number of valid bits in the first information field is used for determining first information carried in the first information field, wherein the first information comprises the transmission parameters for the simultaneous multi-TRP/panel/beam transmission.

23. The method of any one of claims 1 to 22, wherein the first information field comprises one or more of:
a phase tracking reference signal and demodulation reference signal (PTRS-DMRS) association field, a transmitted precoding matrix indicator (TPMI) field, or a sounding reference signal (SRS) resource indicator (SRI) field.

24. The method of any one of claims 1 to 22, further comprising:
transmitting, by the terminal device, second information to a network device, wherein the second information indicates a quantity of maximum numbers of transmission layers supported for configuration by the terminal device.

25. The method of claim 24, wherein the second information indicates one or more of:

the terminal device supports configuration of N+1 maximum numbers of transmission layers, wherein N maximum numbers of transmission layers among the N+1 maximum numbers of transmission layers are used for a first transmission mode, and a remaining maximum number of transmission layers among the N+1 maximum numbers of transmission layers is used for a second transmission mode;

the terminal device supports configuration of N maximum numbers of transmission layers, wherein the N maximum numbers of transmission layers are used for the first transmission mode, a specified maximum number of transmission layers among the N maximum numbers of transmission layers is used for the second transmission mode, and the specified maximum number of transmission layers and the second transmission mode are associated with a same spatial parameter;

the terminal device supports configuration of 2 maximum numbers of transmission layers, wherein one of the 2 maximum numbers of transmission layers is used for the first transmission mode, and the other one of the 2 maximum numbers of transmission layers is used for the second transmission mode; or

the terminal device supports configuration of one maximum number of transmission layers, wherein the one maximum number of transmission layers is used for the first transmission mode and/or the second transmission mode;

wherein the first transmission mode comprises simultaneous multi-transmission/reception point (TRP)/panel/-beam transmission, and the second transmission mode comprises single-TRP/panel/beam transmission.

26. The method of claim 25, wherein:
in a case that the terminal device supports the configuration of the one maximum number of transmission layers, the maximum numbers of transmission layers respectively associated with the plurality of spatial parameters are a minimum one of a first value and a second value, wherein the first value is a maximum number of transmission layers supported for transmission by each TRP/panel/beam in the first transmission mode, and the second value is a maximum number of transmission layers supported for transmission by the single TRP/panel/beam in the second transmission mode.

27. The method of any one of claims 24 to 26, further comprising:
transmitting, by the terminal device, third information to the network device, wherein the third information indicates values of the maximum numbers of transmission layers supported for configuration by the terminal device.

28. The method of any one of claims 1 to 27, wherein the maximum numbers of transmission layers respectively associated with the plurality of spatial parameters, and/or a third maximum number of transmission layers are determined based on any one of:

values of maximum numbers of transmission layers that are supported for configuration by the terminal device;
configuration information transmitted from a network device; or
a predefined rule.

29. The method of any one of claims 1 to 28, wherein:

the maximum numbers of transmission layers respectively associated with the plurality of spatial parameters are all different from a second value, wherein the second value is a maximum number of transmission layers supported for transmission by the single TRP/panel/beam in the second transmission mode; or

a specified maximum number of transmission layers among the maximum numbers of transmission layers respectively associated with the plurality of spatial parameters is the same as the second value, wherein the specified maximum number of transmission layers and the second transmission mode are associated with a same spatial parameter.

30. The method of any one of claims 1 to 29, wherein,

a third maximum number of transmission layers is different from a second value; or
the third maximum number of transmission layers is a minimum one of a first value and a second value, wherein the first value is a maximum number of transmission layers supported for transmission by each TRP/panel/beam in the first transmission mode, and the second value is a maximum number of transmission layers supported for transmission by the single TRP/panel/beam in the second transmission mode.

31. The method of any one of claims 1 to 30, wherein determining, by the terminal device, the number of valid bits in the first information field based on the maximum number(s) of transmission layers associated with the one or the plurality of spatial parameters comprises:

in a case that fourth information is received, determining, by the terminal device, the number of valid bits in the first information field based on the maximum number(s) of transmission layers associated with the one or the plurality of spatial parameters,

wherein the fourth information indicates simultaneous multi-transmission/reception point (TRP)/panel/beam transmission for an uplink channel.

32. The method of claim 31, wherein:
the fourth information is first sounding reference signal (SRS) resource set indication information, and the first SRS resource set indication information indicates an SRS resource set.

33. The method of any one of claims 1 to 32, further comprising:
receiving, by the terminal device, first downlink control information (DCI), wherein the first DCI is used for scheduling simultaneous multi-transmission/reception point (TRP)/panel/beam transmission, and the first DCI comprises the first information field.

34. The method of claim 33, wherein:
a total number of bits in the first DCI is the same as a total number of bits in a second DCI, and the second DCI is used for scheduling single-TRP/panel/beam transmission.

35. The method of claim 34, wherein:
the total number of bits in the first DCI and the total number of bits in the second DCI are a maximum one of a number of valid bits in the first DCI and a number of valid bits in the second DCI.

36. The method of claim 34 or 35, wherein:
in a case that a number of valid bits in the first DCI is different from a number of valid bits in the second DCI, one of the first DCI or the second DCI with a smaller number of valid bits is subjected to zero padding, until the total number of bits reaches the total number of bits in the other one of the first DCI or the second DCI with a larger number of valid bits.

37. The method of any one of claims 34 to 36, wherein the second DCI comprises a second information field, and the second information field has a same function as the first information field; and
a total number of bits in the second information field is the same as a total number of bits in the first information field.

38. The method of claim 37, wherein:
the total number of bits in the first information field and the total number of bits in the second information field are a maximum one of the number of valid bits in the first information field and a number of valid bits in the second information field.

39. The method of claim 37 or 38, wherein:
in a case that a number of valid bits in the second information field is different from the number of valid bits in the first information field, one of the first information field or the second information field with a smaller number of valid bits is subjected to zero padding, until the total number of bits reaches the total number of bits in the other one of the first information field or the second information field with a larger number of valid bits.

40. The method of any one of claims 34 to 36, wherein the second DCI comprises a second information field, and the second information field has a same function as the first information field; and

the first information field comprises N information sub-fields corresponding to the plurality of spatial parameters respectively;
a total number of bits in a specified information sub-field in the first information field is the same as a total number of bits in the second information field; and
a spatial parameter corresponding to the specified information sub-field is the same as a spatial parameter associated with the second information field.

41. The method of claim 40, wherein:
the total number of bits in the target information sub-field and the total number of bits in the second information field are a maximum one of a number of valid bits in the target information sub-field and a number of valid bits in the second information field.

**42.** The method of claim 40 or 41, wherein,
in a case that a number of valid bits in the target information sub-field is different from a number of valid bits in the second information field, one of the target information sub-field or the second information field with a smaller number of valid bits is subjected to zero padding, until the total number of bits reaches the total number of bits in the other one of the target information sub-field or the second information field with a larger number of valid bits.

**43.** The method of any one of claims 1 to 41, wherein the one or the plurality of spatial parameters comprise one or more of: reference signal set information, transmission configuration indicator (TCI) state information, panel information, control resource set (CORESET) pool information, beam information, or transmission/reception point (TRP) information.

**44.** A method for information processing, comprising:
transmitting, by a network device, first information to a terminal device, wherein the first information is carried by a first information field, and a number of valid bits in the first information field is determined by maximum number(s) of transmission layers associated with one or a plurality of spatial parameters.

**45.** The method of claim 44, wherein the number of valid bits in the first information field is determined based on the maximum numbers of transmission layers respectively associated with the plurality of spatial parameters.

**46.** The method of claim 45, wherein a number of the plurality of spatial parameters is N, and the number M of valid bits in the first information field is determined according to a following formula:

$$M = \sum_{i=1}^{N} \lceil \log_2 x_i \rceil$$

wherein $\lceil \cdot \rceil$ denotes ceiling, $x_i$ is a maximum number of transmission layers associated with an $i^{th}$ spatial parameter, and $x_i$ is an integer greater than or equal to 1.

**47.** The method of claim 46, wherein the M valid bits in the first information field comprises N parts, an $i^{th}$ part of the N parts corresponds to an $i^{th}$ spatial parameter of the plurality of spatial parameters, and the $i^{th}$ part comprises $\lceil \log_2 x_i \rceil$ valid bits.

**48.** The method of claim 46, wherein the first information field comprises N information sub-fields, an $i^{th}$ information sub-field of the N information sub-fields corresponds to an $i^{th}$ spatial parameter of the N spatial parameters, and the $i^{th}$ information sub-field comprises $\lceil \log_2 x_i \rceil$ valid bits.

**49.** The method of any one of claims 45 to 48, wherein a number of the plurality of spatial parameters is N;

in a case that the maximum numbers of transmission layers respectively associated with the N spatial parameters are all 1, the number of valid bits in the first information field is 0;
in a case that k maximum numbers of transmission layers among the maximum numbers of transmission layers respectively associated with the N spatial parameters are 2, and remaining N-k maximum numbers of transmission layers are 1, the number of valid bits in the first information field is k, k being an integer greater than or equal to 1 and less than or equal to N.

**50.** The method of claim 49, wherein each of the k valid bits in the first information field corresponds to a specified spatial parameter of the N spatial parameters, and a maximum number of transmission layers associated with the specified spatial parameter is 2.

**51.** The method of claim 49, wherein the first information field comprises N information sub-fields, and the N information sub-fields correspond to the N spatial parameters respectively; and
an information sub-field corresponding to a spatial parameter of the N spatial parameters which is associated with a maximum number 2 of transmission layers comprises 1 valid bit, and an information sub-field corresponding to a spatial parameter of the N spatial parameters which is associated with a maximum number 1 of transmission layers comprises 0 valid bit.

52. The method of any one of claims 45 to 51, wherein the plurality of spatial parameters comprise a first spatial parameter and a second spatial parameter, the first spatial parameter is associated with a first maximum number of transmission layers, and the second spatial parameter is associated with a second maximum number of transmission layers; wherein

in a case that the first maximum number of transmission layers is 1, and the second maximum number of transmission layers is 1, the number of valid bits in the first information field is 0;
in a case that one of the first maximum number of transmission layers and the second maximum number of transmission layers is 1, and the other one is 2, the number of valid bits in the first information field is 1;
in a case that both the first maximum number of transmission layers and the second maximum number of transmission layers are 2, the number of valid bits in the first information field is 2.

53. The method of claim 52, wherein in the case that the one of the first maximum number of transmission layers and the second maximum number of transmission layers is 1, and the other one is 2, the first information field corresponds to a specified spatial parameter, a maximum number of transmission layers associated with the specified spatial parameter being 2;
in the case that both the first maximum number of transmission layers and the second maximum number of transmission layers are 2, the 2 bits in the first information field correspond to the first spatial parameter and the second spatial parameter respectively.

54. The method of claim 52, wherein the first information field comprises a first information sub-field and a second information sub-field, the first information sub-field corresponds to the first spatial parameter and the second information sub-field corresponds to the second spatial parameter;

in the case that the one of the first maximum number of transmission layers and the second maximum number of transmission layers is 1, and the other one is 2, a first target information sub-field of the first information field comprises 0 valid bit, and a second target information sub-field of the first information field comprises 1 valid bit, wherein the first target information sub-field corresponds to a spatial parameter associated with the maximum number 1 of transmission layers, and the second target information sub-field corresponds to a spatial parameter associated with the maximum number 2 of transmission layers;
in the case that both the first maximum number of transmission layers and the second maximum number of transmission layers are 2, the first information sub-field and the second information sub-field each comprises 1 valid bit.

55. The method of claim 44, wherein the number of valid bits in the first information field is determined based on a third maximum number of transmission layers associated with the plurality of spatial parameters.

56. The method of claim 55, wherein a number of the plurality of spatial parameters is N, and the number M of valid bits in the first information field is determined according to a following formula:

$$M = N * \lceil \log_2 y \rceil$$

wherein $\lceil \cdot \rceil$ denotes ceiling, and y is the third maximum number of transmission layers.

57. The method of claim 56, wherein the M valid bits comprise N parts, an $i^{th}$ part of the N parts corresponds to an $i^{th}$ spatial parameter of the plurality of spatial parameters, and the $i^{th}$ part comprises $\lceil \log_2 y \rceil$ valid bits.

58. The method of claim 56, wherein the first information field comprises N information sub-fields, an $i^{th}$ information sub-field of the N information sub-fields corresponds to an $i^{th}$ spatial parameter of the N spatial parameters, and the $i^{th}$ information sub-field comprises $\lceil \log_2 y \rceil$ valid bits.

**59.** The method of any one of claims 55 to 58, wherein a number of the plurality of spatial parameters is N;

in a case that the third maximum number of transmission layers is 1, the number of valid bits in the first information field is 0;
in a case that the third maximum number of transmission layers is 2, the number of valid bits in the first information field is N.

**60.** The method of claim 59, wherein in the case that the third maximum number of transmission layers is 2, the N valid bits in the first information field correspond to the N spatial parameters respectively.

**61.** The method of claim 59, wherein the first information field comprises N information sub-fields, and the N information sub-fields correspond to the N spatial parameters respectively; and
in the case that the third maximum number of transmission layers is 2, the N information sub-fields each comprises 1 valid bit.

**62.** The method of any one of claims 55 to 61, wherein the plurality of spatial parameters comprises a first spatial parameter and a second spatial parameter;

in a case that the third maximum number of transmission layers is 1, the number of valid bits in the first information field is 0;
in a case that the third maximum number of transmission layers is 2, the number of valid bits in the first information field is 2.

**63.** The method of claim 62, wherein in the case that the third maximum number of transmission layers is 2, the 2 bits in the first information field correspond to the first spatial parameter and the second spatial parameter respectively.

**64.** The method of claim 62, wherein the first information field comprises a first information sub-field and a second information sub-field, the first information sub-field corresponds to the first spatial parameter and the second information sub-field corresponds to the second spatial parameter; and
in the case that the third maximum number of transmission layers is 2, the first information sub-field and the second information sub-field each comprises 1 valid bit.

**65.** The method of any one of claims 44 to 64, wherein the first information field is used to indicate transmission parameters for simultaneous multi-transmission/reception point (TRP)/panel/beam transmission, and the first information comprises the transmission parameters for the simultaneous multi-TRP/panel/beam transmission.

**66.** The method of any one of claims 44 to 65, wherein the first information field comprises one or more of:
a phase tracking reference signal and demodulation reference signal (PTRS-DMRS) association field, a transmitted precoding matrix indicator (TPMI) field, or a sounding reference signal (SRS) resource indicator (SRI) field.

**67.** The method of any one of claims 44 to 66, further comprising:
receiving, by the network device, second information from the terminal device, wherein the second information indicates a quantity of maximum numbers of transmission layers supported for configuration by the terminal device.

**68.** The method of claim 67, wherein the second information indicates one or more of:

the terminal device supports configuration of N+1 maximum numbers of transmission layers, wherein N maximum numbers of transmission layers among the N+1 maximum numbers of transmission layers are used for a first transmission mode, and a remaining maximum number of transmission layers among the N+1 maximum numbers of transmission layers is used for a second transmission mode;
the terminal device supports configuration of N maximum numbers of transmission layers, the N maximum numbers of transmission layers are used for the first transmission mode, a specified maximum number of transmission layers among the N maximum numbers of transmission layers is used for the second transmission mode, and the specified maximum number of transmission layers and the second transmission mode are associated with a same spatial parameter;
the terminal device supports configuration of 2 maximum numbers of transmission layers, one of the 2 maximum numbers of transmission layers is used for the first transmission mode, and the other one of the 2 maximum numbers of transmission layers is used for the second transmission mode; or

the terminal device supports configuration of one maximum number of transmission layers that is used for the first transmission mode and/or the second transmission mode;

wherein the first transmission mode comprises simultaneous multi-transmission/reception point (TRP)/panel/-beam transmission, and the second transmission mode comprises single-TRP/panel/beam transmission.

69. The method of claim 68, wherein in a case that the terminal device supports the configuration of the one maximum number of transmission layers, the maximum numbers of transmission layers respectively associated with the plurality of spatial parameters are a minimum one of a first value and a second value, wherein the first value is a maximum number of transmission layers supported for transmission by each TRP/panel/beam in the first transmission mode, and the second value is a maximum number of transmission layers supported for transmission by the single TRP/panel/beam in the second transmission mode.

70. The method of any one of claims 67 to 69, further comprising:
receiving, by the network device, third information from the terminal device, wherein the third information indicates values of the maximum numbers of transmission layers supported for configuration by the terminal device.

71. The method of any one of claims 44 to 70, wherein the maximum numbers of transmission layers respectively associated with the plurality of spatial parameters, and/or the third maximum number of transmission layers are determined based on any one of:

values of maximum numbers of transmission layers supported for configuration by the terminal device;
configuration information transmitted the by network device; or
a predefined rule.

72. The method of any one of claims 44 to 71, wherein the maximum numbers of transmission layers respectively associated with the plurality of spatial parameters are all different from a second value, wherein the second value is a maximum number of transmission layers supported for transmission by the single TRP/panel/beam in the second transmission mode; or
a specified maximum number of transmission layers among the maximum numbers of transmission layers respectively associated with the plurality of spatial parameters is the same as the second value, wherein the specified maximum number of transmission layers and the second transmission mode are associated with a same spatial parameter.

73. The method of any one of claims 44 to 72, wherein the third maximum number of transmission layers is different from a second value; or
the third maximum number of transmission layers is a minimum one of a first value and a second value, wherein the first value is a maximum number of transmission layers supported for transmission by each TRP/panel/beam in the first transmission mode, and the second value is a maximum number of transmission layers supported for transmission by the single TRP/panel/beam in the second transmission mode.

74. The method of any one of claims 44 to 73, wherein:
in a case that the network device transmits fourth information, the number of valid bits in the first information field is determined based on the maximum number(s) of transmission layers associated with the one or the plurality of spatial parameters, wherein the fourth information indicates simultaneous multi-transmission/reception point (TRP)/panel/-beam transmission for an uplink channel.

75. The method of claim 74, wherein the fourth information is first sounding reference signal (SRS) resource set indication information, and the first SRS resource set indication information indicates an SRS resource set.

76. The method of any one of claims 44 to 75, further comprising:
transmitting, by the network device, first downlink control information (DCI) to the terminal device, wherein the first DCI is used for scheduling simultaneous multi-transmission/reception point (TRP)/panel/beam transmission, and the first DCI comprises the first information field.

77. The method of claim 76, wherein a total number of bits in the first DCI is the same as a total number of bits in a second DCI, and the second DCI is used for scheduling single-TRP/panel/beam transmission.

78. The method of claim 77, wherein the total number of bits in the first DCI and the total number of bits in the second DCI are a maximum one of a number of valid bits in the first DCI and a number of valid bits in the second DCI.

79. The method of claim 77 or 78, wherein in a case that a number of valid bits in the first DCI is different from a number of valid bits in the second DCI, one of the first DCI or the second DCI with a smaller number of valid bits is subjected to zero padding, until the total number of bits reaches the total number of bits in the other one of the first DCI or the second DCI with a larger number of valid bits.

80. The method of any one of claims 77 to 79, wherein the second DCI comprises a second information field, and the second information field has a same function as the first information field; and
a total number of bits in the second information field is the same as a total number of bits in the first information field.

81. The method of claim 80, wherein the total number of bits in the first information field and the total number of bits in the second information field are a maximum one of the number of valid bits in the first information field and a number of valid bits in the second information field.

82. The method of claim 80 or 81, wherein in a case that a number of valid bits in the second information field is different from the number of valid bits in the first information field, one of the first information field or the second information field with a smaller number of valid bits is subjected to zero padding, until the total number of bits reaches the total number of valid bits in the other one of the first information field or the second information field with a larger number of valid bits.

83. The method of any one of claims 77 to 79, wherein the second DCI comprises a second information field, and the second information field has a same function as the first information field; and

the first information field comprises N information sub-fields corresponding to the plurality of spatial parameters respectively;
a total number of bits in a specified information sub-field in the first information field is the same as a total number of bits in the second information field; and
a spatial parameter corresponding to the specified information sub-field is the same as a spatial parameter associated with the second information field.

84. The method of claim 83, wherein the total number of bits in the target information sub-field and the total number of bits in the second information field are a maximum one of a number of valid bits in the target information sub-field and a number of valid bits in the second information field.

85. The method of claim 83 or 84, wherein in a case that a number of valid bits in the target information sub-field is different from a number of valid bits in the second information field, one of the target information sub-field or the second information field with a smaller number of valid bits is subjected to zero padding, until the total number of bits reaches the total number of bits in the other one of the target information sub-field or the second information field with a larger number of valid bits.

86. The method of any one of claims 44 to 85, wherein the one or the plurality of spatial parameters comprise one or more of:
reference signal set information, transmission configuration indicator (TCI) state information, panel information, control resource set (CORESET) pool information, beam information, or transmission/reception point (TRP) information.

87. An apparatus for information processing, applied to a terminal device and comprising:
a determination unit, configured to determine a number of valid bits in a first information field based on maximum number(s) of transmission layers associated with one or a plurality of spatial parameters.

88. An apparatus for information processing, applied to a network device and comprising:
a second sending unit, configured to transmit first information to a terminal device, wherein the first information is carried by a first information field, and a number of valid bits in the first information field is determined by maximum number(s) of transmission layers associated with one or a plurality of spatial parameters.

89. A terminal device, comprising a memory, a processor and a transceiver,

wherein the transceiver is configured to perform communication with a network device;

the memory is configured to store a computer program executable on the processor; and
the processor is configured to cooperate with the transceiver to execute the computer program to perform the method of any one of claims 1 to 43.

90. A network device, comprising a memory, a processor and a transceiver,

wherein the transceiver is configured to perform communication with a terminal device;
the memory is configured to store a computer program executable on the processor; and
the processor is configured to cooperate with the transceiver to execute the computer program to perform the method of any one of claims 44 to 86.

91. A computer storage medium for storing one or more computer programs that, when executed by one or more processors, perform the method of any one of claims 1 to 43 or the method of any one of claims 44 to 86.

92. A chip, comprising a processor configured to call and run a computer program from a memory to enable a device installed with the chip to perform the method of any one of claims 1 to 43 or the method of any one of claims 44 to 86.

93. A computer program product comprising a computer storage medium for storing a computer program, wherein the computer program comprises instructions executable by at least one processor, and the instructions, when executed by the at least one processor, cause the at least one processor to perform the method of any one of claims 1 to 43, or the method of any one of claims 44 to 86.

94. A computer program for causing a computer to perform the method of any one of claims 1 to 43, or the method of any one of claims 44 to 86.

**FIG. 1**

Operation 200, transmit first information, where the first information is carried by a first information field

Operation 210, determine the number of valid bits in the first information field based on the maximum number(s) of transmission layers associated with one or multiple spatial parameters

**FIG. 2**

**FIG. 3**

**FIG. 4**

| Terminal device | | Network device |
|---|---|---|

Operation 220, transmit second information indicating a quantity of the maximum numbers of transmission layers supported for configuration by the terminal device

Operation 230, transmit third information indicating values of the maximum numbers of transmission layers supported for configuration by the terminal device

Operation 200, transmit first information, where the first information is carried by a first information field

Operation 210, determine the number of valid bits in the first information field based on the maximum number(s) of transmission layers associated with one or multiple spatial parameters

**FIG. 5**

Apparatus 600 for information processing

601

Determination unit

**FIG. 6**

Apparatus 700 for
information processing

701

Second transceiver unit

**FIG. 7**

Communication device 800

Memory
820

Processor
810

Tranceiver
830

**FIG. 8**

Chip 900

Input
interface
930

Processor
910

Memory
920

Output
interface
940

**FIG. 9**

Communication system 1000

Terminal
device
1010

Network
device
1020

**FIG. 10**

## INTERNATIONAL SEARCH REPORT

| International application No. |
|---|
| **PCT/CN2022/141118** |

### A. CLASSIFICATION OF SUBJECT MATTER

H04W72/04(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, VEN, 3GPP, IEEE, CNKI: 最大 2d (层 or 秩), 域, 字段, 预编码 2w 指示, 探测参考信号 2w 指示, 相位跟踪参考信号, 解调参考信号, 比特, 数, 有效, 多, (传输 or 发送) 1w 接收点, 天线, 波束, (Maximum or max) 2d (layer? or rank), domain, field, TPMI, SRI, PTRS, DMRS, PTRS-DMRS, bit, number, Significant, effective, efficient, valid, MSB, LSB, multi, TRP, panel, beam

### C. DOCUMENTS CONSIDERED TO BE RELEVANT

| Category* | Citation of document, with indication, where appropriate, of the relevant passages | Relevant to claim No. |
|---|---|---|
| E | CN 115915424 A (VIVO COMMUNICATION TECHNOLOGY CO., LTD.) 04 April 2023 (2023-04-04)<br>description, paragraphs [0005]-[0150] | 1, 12, 19, 22-23, 33, 43-44, 55, 62, 65-66, 76, 86-87, 91, 93-94 |
| X | CN 114765879 A (VIVO COMMUNICATION TECHNOLOGY CO., LTD.) 19 July 2022 (2022-07-19)<br>description, paragraphs [0050]-[0225] | 1-2, 12, 16-33, 43-45, 55, 59-76, 86-94 |
| X | CN 114585099 A (VIVO COMMUNICATION TECHNOLOGY CO., LTD.) 03 June 2022 (2022-06-03)<br>description, paragraphs [0027]-[0172] | 1-2, 12, 16-33, 43-45, 55, 59-76, 86-94 |
| X | CN 115136703 A (QUALCOMM INC.) 30 September 2022 (2022-09-30)<br>description, paragraphs [0130]-[0145] | 1-2, 12, 16-33, 43-45, 55, 59-76, 86-94 |
| X | WO 2022227033 A1 (OPPO GUANGDONG MOBILE TELECOMMUNICATIONS CO., LTD.) 03 November 2022 (2022-11-03)<br>description, paragraphs [0072]-[0272] | 1-2, 12, 16-33, 43-45, 55, 59-76, 86-94 |

[✓] Further documents are listed in the continuation of Box C.  [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 August 2023** | **22 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/141118**

**C.    DOCUMENTS CONSIDERED TO BE RELEVANT**

| Category* | Citation of document, with indication, where appropriate, of the relevant passages | Relevant to claim No. |
|---|---|---|
| A | US 2022239410 A1 (SAMSUNG ELECTRONICS CO., LTD.) 28 July 2022 (2022-07-28) entire document | 1-94 |
| A | NEC. "Discussion on multi-TRP for PUCCH and PUSCH" *3GPP TSG RAN WG1 #105-e R1-2105247,* 12 May 2021 (2021-05-12), entire document | 1-94 |

Form PCT/ISA/210 (second sheet) (July 2022)

## INTERNATIONAL SEARCH REPORT
### Information on patent family members

International application No.

**PCT/CN2022/141118**

| Patent document cited in search report | | | Publication date (day/month/year) | Patent family member(s) | | | Publication date (day/month/year) |
|---|---|---|---|---|---|---|---|
| CN | 115915424 | A | 04 April 2023 | None | | | |
| CN | 114765879 | A | 19 July 2022 | WO | 2022152271 | A1 | 21 July 2022 |
| CN | 114585099 | A | 03 June 2022 | WO | 2022117035 | A1 | 09 June 2022 |
| CN | 115136703 | A | 30 September 2022 | BR | 112022016206 | A2 | 04 October 2022 |
| | | | | US | 2023057080 | A1 | 23 February 2023 |
| | | | | TW | 202139759 | A | 16 October 2021 |
| | | | | EP | 4111793 | A1 | 04 January 2023 |
| | | | | KR | 20220146450 | A | 01 November 2022 |
| | | | | WO | 2021169938 | A1 | 02 September 2021 |
| | | | | WO | 2021168599 | A1 | 02 September 2021 |
| | | | | IN | 202247042017 | A | 26 August 2022 |
| | | | | VN | 91082 | A | 25 November 2022 |
| WO | 2022227033 | A1 | 03 November 2022 | None | | | |
| US | 2022239410 | A1 | 28 July 2022 | WO | 2022154539 | A1 | 21 July 2022 |
| | | | | KR | 20220103569 | A | 22 July 2022 |

Form PCT/ISA/210 (patent family annex) (July 2022)